(19) 

Europäisches
Patentamt
European
Patent Office
Office européen
des brevets

(11) **EP 4 746 488 A1**

(12) **EUROPEAN PATENT APPLICATION**
published in accordance with Art. 153(4) EPC

(43) Date of publication:
**20.05.2026 Bulletin 2026/21**

(21) Application number: **23944644.6**

(22) Date of filing: **11.07.2023**

(51) International Patent Classification (IPC):
**H04W 24/02** (2009.01)

(52) Cooperative Patent Classification (CPC):
**H04W 24/10; H04B 17/309; H04W 24/02**

(86) International application number:
**PCT/CN2023/106764**

(87) International publication number:
**WO 2025/010621 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **CUI, Shengjiang
Dongguan, Guangdong 523860 (CN)**
• **XU, Weijie
Dongguan, Guangdong 523860 (CN)**

(74) Representative: **Penza, Giancarlo
Bugnion S.p.A.
Viale Lancetti, 17
20158 Milano (IT)**

(54) **COMMUNICATION PROCESSING METHOD AND APPARATUS, TERMINAL DEVICE, AND NETWORK DEVICE**

(57) Embodiments of the disclosure provide a communication processing method and apparatus, a terminal device, and a network device. The method includes that: the terminal device determines one or more first decision thresholds and/or one or more first offset parameters associated with a type of a first receiver. The one or more first decision thresholds and/or the one or more first offset parameters are configured for performing one or more decisions related to one or more signal measurements of the first receiver.

A terminal device determines one or more first decision thresholds and/or one or more first offset parameters associated with a type of a first receiver; herein the one or more first decision thresholds and/or the one or more first offset parameters are configured for performing one or more decisions related to one or more signal measurements of the first receiver ⸺ S110

**FIG. 2**

EP 4 746 488 A1

**Description**

TECHNICAL FIELD

Embodiments of the disclosure relate to the technical field of mobile communications, and in particular to a communication processing method and apparatus, a terminal device, and a network device.

BACKGROUND

In order to further reduce power consumption of a terminal device, receivers with low power consumption/low complexity, e.g., low power wake up radios (LP-WURs), have been introduced into the terminal device.
At present, LP-WURs in the terminal device may include multiple types, e.g., receivers based on envelope detection or receivers based on orthogonal frequency division multiplexing (OFDM) signal processing. Functions, structures, and implementations of different types of LP-WURs are different, leading to differences in signal measurements among different types of LP-WURs.
In practical applications, a communication network may support different types of LP-WURs. However, how to achieve measurement-related processing compatible with different types of LP-WURs and reduce measurement differences among different types of LP-WURs is an urgent problem to be solved.

SUMMARY

Embodiments of the disclosure provide a communication processing method and apparatus, a terminal device, and a network device.
According to an embodiment of the disclosure, a communication processing method is provided, and the communication processing method includes the following operation.
A terminal device determines one or more first decision thresholds and/or one or more first offset parameters associated with a type of a first receiver. The one or more first decision thresholds and/or the one or more first offset parameters are configured for performing one or more decisions related to one or more signal measurements of the first receiver.
According to another embodiment of the disclosure, a communication processing method is provided, and the communication processing method includes the following operation.
A network device transmits first information to a terminal device. The first information indicates one or more first decision thresholds and/or one or more first offset parameters associated with a type of a first receiver of the terminal device; and the one or more first decision thresholds and/or the one or more first offset parameters are configured for performing one or more decisions related to one or more signal measurements of the first receiver.
According to an embodiment of the disclosure, a communication processing apparatus is provided. The communication processing apparatus is applied to a terminal device, and includes a determining unit.
The determining unit is configured to determine one or more first decision thresholds and/or one or more first offset parameters associated with a type of a first receiver. The one or more first decision thresholds and/or the one or more first offset parameters are configured for performing one or more decisions related to one or more signal measurements of the first receiver.
According to another embodiment of the disclosure, a communication processing apparatus is provided. The communication processing apparatus is applied to a network device, and includes a transmitting unit.
The transmitting unit is configured to transmit first information to a terminal device. The first information indicates one or more first decision thresholds and/or one or more first offset parameters associated with a type of a first receiver of the terminal device; and the one or more first decision thresholds and/or the one or more first offset parameters are configured for performing one or more decisions related to one or more signal measurements of the first receiver.
According to an embodiment of the disclosure, a communication device is provided. The communication device may be the terminal device in the above solutions or the network device in the above solutions. The communication device includes a processor and a memory. The memory is configured to store a computer program, and the processor is configured to call and run the computer program stored in the memory to implement the communication processing method described above.
According to an embodiment of the disclosure, a chip is provided. The chip is configured to implement the communication processing method described above.
Specifically, the chip includes a processor configured to call and run a computer program from a memory, causing a device installed with the chip to implement the communication processing method described above.
According to an embodiment of the disclosure, a computer-readable storage medium is provided. The computer-readable storage medium is configured to store a computer program that enables a computer to implement the communication processing method described above.

According to an embodiment of the disclosure, a computer program product is provided. The computer program product includes computer program instructions that enable a computer to implement the communication processing method described above.

According to an embodiment of the disclosure, a computer program is provided. The computer program, when running on a computer, causes the computer to implement the communication processing method described above.

The embodiment of the disclosure provides a communication processing method. Here, a terminal device may determine one or more first decision thresholds and/or one or more first offset parameters associated with a type of a first receiver. The one or more first decision thresholds and/or the one or more first offset parameters are configured for performing one or more decisions related to one or more signal measurements of the first receiver. It can be seen that each type of first receiver may have associated (/matched/corresponding) first decision threshold(s) and/or first offset parameter(s). In this way, according to a type to which a first receiver of the terminal device belongs, the terminal device may select first decision threshold(s) and/or first offset parameter(s) associated with this type, to perform decision(s) related to measurement(s) based on the first decision threshold(s) and/or the first offset parameter(s). It can be seen that each type of first receiver may perform measurement decision(s) based on its associated first decision threshold(s) and/or first offset parameter(s), thereby compensating for errors in signal measurement results among different types of first receivers, enabling compatibility with different types of first receivers to a greatest extent, and maintaining system stability.

BRIEF DESCRIPTION OF THE DRAWINGS

The drawings illustrated herein are provided to facilitate a further understanding of the disclosure, and constitute a part of the disclosure. The illustrative embodiments of the disclosure and their descriptions are configured for explaining the disclosure, and do not constitute any undue limitation of the disclosure. In the drawings:

FIG. 1 is a schematic diagram of a communication architecture according to an embodiment of the disclosure;

FIG. 2 is a first schematic flowchart of a communication processing method according to an embodiment of the disclosure;

FIG. 3 is a second schematic flowchart of a communication processing method according to an embodiment of the disclosure;

FIG. 4 is a third schematic flowchart of a communication processing method according to an embodiment of the disclosure;

FIG. 5 is a fourth schematic flowchart of a communication processing method according to an embodiment of the disclosure;

FIG. 6 is a fifth schematic flowchart of a communication processing method according to an embodiment of the disclosure;

FIG. 7 is a schematic diagram of a structural composition of a communication processing apparatus 700 according to an embodiment of the disclosure;

FIG. 8 is a schematic diagram of a structural composition of a communication processing apparatus 800 according to an embodiment of the disclosure;

FIG. 9 is a schematic structural diagram of a communication device according to an embodiment of the disclosure;

FIG. 10 is a schematic structural diagram of a chip according to an embodiment of the disclosure; and

FIG. 11 is a schematic block diagram of a communication system according to an embodiment of the disclosure.

DETAILED DESCRIPTION

The technical solutions in the embodiments of the disclosure are described in the following with reference to the drawings in the embodiments of the disclosure. It is apparent that the described embodiments are part of the embodiments of the disclosure, but not all of the embodiments. Based on the embodiments of the disclosure, all other embodiments acquired by those skilled in the art without creative efforts shall fall within the scope of protection of the disclosure.

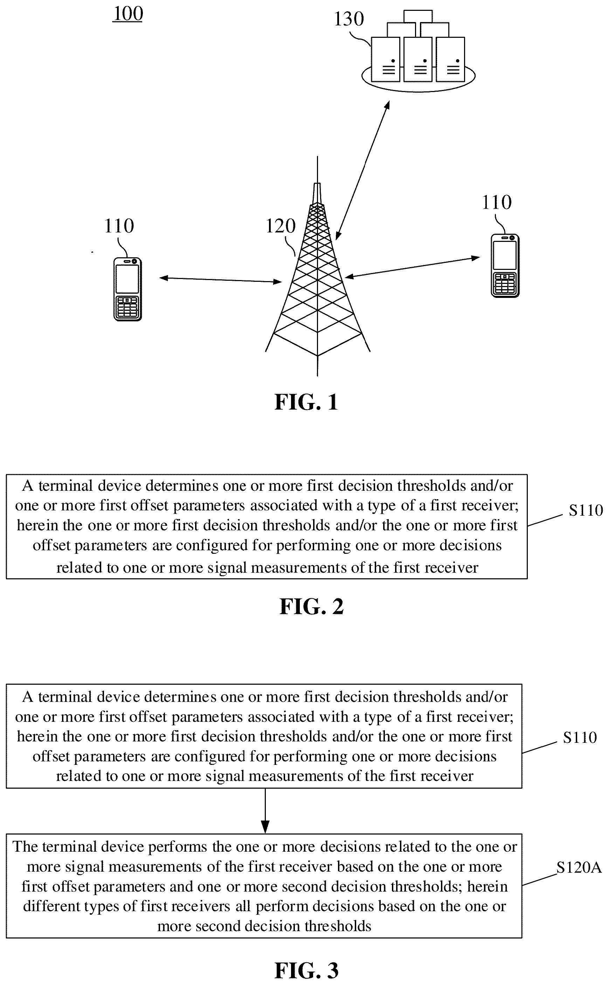

FIG. 1 is a schematic diagram of an application scenario in an embodiment of the disclosure.

As shown in FIG. 1, a communication system 100 may include terminal devices 110 and a network device 120. The network device 120 may communicate with the terminal devices 110 over an air interface. Multi-service transmission is supported between the terminal devices 110 and the network device 120.

It should be understood that, in the embodiments of the disclosure, the communication system 100 is only used as an example for illustrative purpose, but the embodiments of the disclosure are not limited thereto. That is, the technical solutions in the embodiments of the disclosure may be applied to various communication systems, such as: a long term evolution (LTE) system, an LTE time division duplex (TDD), a universal mobile telecommunication system (UMTS), an Internet of things (IoT) system, a narrow band IoT (NB-IoT) system, an enhanced machine-type communication (eMTC) system, a 5th generation (5G) communication system (also referred to as a new radio (NR) communication system), or a future communication system, etc.

In the communication system 100 shown in FIG. 1, the network device 120 may be an access network device that communicates with the terminal devices 110. The access network device may provide communication coverage for a specific geographic area, and may communicate with the terminal devices 110 (e.g., UEs) located within the coverage.

The network device 120 may be an evolutional node B (eNB or eNodeB) in an LTE system, a next generation radio access network (NG RAN) device, or a base station (gNB) in an NR system, or a wireless controller in a cloud radio access network (CRAN). Alternatively, the network device 120 may be a relay station, an access point, a vehicle-mounted device, a wearable device, a hub, a switch, a bridge, a router, or a network device in a future evolutional public land mobile network (PLMN), etc.

The terminal devices 110 may be any terminal device, including but not limited to terminal devices that are connected to the network device 120 or other terminal devices via wired or wireless connections.

For example, each of the terminal devices 110 may refer to an access terminal, a user equipment (UE), a user unit, a user station, a mobile station, a mobile site, a remote station, a remote terminal, a mobile device, a user terminal, a terminal, a wireless communication device, a user agent, or a user apparatus. The access terminal may be a cellular phone, a cordless phone, a session initiation protocol (SIP) phone, an IoT device, a satellite handheld terminal, a wireless local loop (WLL) station, a personal digital assistant (PDA), a handheld device with wireless communication capabilities, a computing device or another processing device connected to a wireless modem, a vehicle-mounted device, a wearable device, a terminal device in a 5G network, or a terminal device in future evolutional networks, etc.

The terminal devices 110 may be configured for device to device (D2D) communication.

The wireless communication system 100 may further include a core network device 130 that communicates with the base station. The core network device 130 may be a 5G core (5GC) device, such as an access and mobility management function (AMF), an authentication server function (AUSF), a user plane function (UPF), or a session management function (SMF). Optionally, the core network device 130 may also be an evolved packet core (EPC) device in the LTE network, such as a session management function + core packet gateway (SMF+PGW-C) device. It should be understood that the SMF+PGW-C may simultaneously implement functions of both the SMF and the PGW-C. During network evolution process, the aforementioned core network device may also be referred to by other names, or new network entities may be formed by dividing functions of the core network, and no limits are made thereto in the embodiments of the disclosure.

Various functional units in the communication system 100 may further establish connections through next generation (NG) interface(s) for realizing communication.

For example, the terminal device may establish an air interface connection with the access network device through an NR interface for transmitting user plane data and control plane signaling. The terminal device may establish a control plane signaling connection with the AMF through an NG interface 1 (referred to as N1). The access network device, such as a next generation wireless access base station (gNB), may establish a user plane data connection with the UPF through an NG interface 3 (referred to as N3). The access network device may establish a control plane signaling connection with the AMF through an NG interface 2 (referred to as N2). The UPF may establish a control plane signaling connection with the SMF through an NG interface 4 (referred to as N4). The UPF may interact user plane data with the data network through an NG interface 6 (referred to as N6). The AMF may establish a control plane signaling connection with the SMF through an NG interface 11 (referred to as N11). The SMF may establish a control plane signaling connection with a policy control function (PCF) through an NG interface 7 (referred to as N7).

One base station, one core network device and two terminal devices are exemplarily illustrated in FIG. 1. Optionally, the wireless communication system 100 may include multiple base station devices, and another number of terminal devices may be included in the coverage of each base station. No limits are made thereto in the embodiments of the disclosure.

It should be noted that FIG. 1 is merely an illustrative example of the system in which the disclosure is applied. Of course, the methods shown in the embodiments of the disclosure may further be applied to other systems. In addition, terms "system" and "network" are often used interchangeably in the disclosure. A term "and/or" in the disclosure is only an association relationship describing associated objects, and indicates that there may be three relationships. For example, A and/or B may indicate three cases: existence of A alone, existence of A and B simultaneously, and existence of B alone. Furthermore, a character "/" in the disclosure generally indicates that preceding and following associated objects are in an "or" relationship. It should also be understood that "indicate" mentioned in the embodiments of the disclosure may be a direct indication or an indirect indication, or may mean that there is an association relationship. For example, A indicates B, which may mean that A indicates B directly (e.g., B may be acquired through A), or may mean that A indicates B indirectly (e.g., A indicates C, and B may be acquired through C), or may mean that there is an association relationship between A and B. It should also be understood that "correspond" mentioned in the embodiments of the disclosure may mean that there is a direct correspondence relationship or an indirect correspondence relationship between two objects, or may mean that there is an association relationship between the two objects, or may mean that there are relationships of indicating and being indicated, configuring and being configured, and the like. It should also be understood that "predefined" or "predefined rule(s)" mentioned in the embodiments of the disclosure may be implemented by pre-storing corresponding code(s), table(s), or other ways that may be used to indicate related information in devices (e.g., including the terminal device and the network device), and the specific implementation is not limited in the disclosure. For example, the "predefined" may refer to those defined in a protocol. It should also be understood that, in the embodiments of the disclosure, the term "protocol" may refer to a standard protocol in the field of communications, such as an LTE protocol, an NR protocol, and a related protocol applied in a future communication system, which is not limited in the disclosure.

In order to facilitate the understanding of the technical solutions in the embodiments of the disclosure, the related technologies of the embodiments of the disclosure are described below. The following related technologies, as optional solutions, may be combined arbitrarily with the technical solutions in the embodiments of the disclosure, and all of the combinations fall within the scope of protection of the embodiments of the disclosure.

The following is an introduction to radio resource management (RRM) measurement and an RRM measurement relaxation mechanism.

When a terminal device is in a Radio Resource Control IDLE (RRC_IDLE) state, this terminal device needs to perform intra-frequency or inter-frequency measurement(s), to perform mobility operation(s), such as cell reselection, based on measurement result(s).

When the terminal is in a connected (RRC_CONNECTED) state, this terminal needs to continuously perform intra-frequency or inter-frequency measurements based on network configuration(s), to perform mobility operation(s), such as cell handover.

The following is an introduction to an RRM measurement power-saving mechanism in the RRC_IDLE state.

In order to reduce power consumption of the terminal device during the measurement process, the following measurement rules are currently supported in the RRC_IDLE state.

For intra-frequency measurement, the following rule is adopted. If measurement results of a serving cell satisfy the following conditions: a signal strength of the serving cell Srxlev>SintraSearchP, and a signal receiving quality of the serving cell Squal>SIntraSearchQ, the terminal device may choose not to perform the intra-frequency measurement. Otherwise, the terminal device needs to perform intra-frequency measurement(s).

For inter-frequency measurement and inter-system (inter-RAT) measurement, the following rules are adopted.

For NR frequency points or inter-RAT frequency bands whose reselection priority is higher than the current NR frequency point, the terminal needs to perform inter-frequency or inter-system measurement(s).

For NR frequency points or inter-RAT frequency points whose reselection priority is lower than or equal to the current NR frequency point, if measurement results of the serving cell satisfy Srxlev>SnonIntraSearchP and Squal>SnonIntraSearchQ, the terminal device may choose not to perform the inter-frequency or inter-system measurement. Otherwise, the terminal device performs inter-frequency or inter-system measurement(s).

The following is an introduction to an RRM measurement power-saving mechanism in the RRC_CONNECTED state.

For terminal devices in the RRC_CONNECTED state, RRM measurements may be performed based on an S measurement criterion. The S measurement criterion may be measured based on synchronization signal/physical broadcast channel block (SS/PBCH block, SSB), or based on channel state information reference signal (CSI-RS).

The S measurement criterion includes the following. If a reference signal receiving power (RSRP) measured by the terminal based on SSB or CSI-RS is greater than a corresponding threshold ssb-RSRP or csi-RSRP, the terminal device only needs to perform measurements of the serving cell and does not perform measurements outside the serving cell. Otherwise, the terminal device performs RRM measurements based on a configuration of monitoring occasion (MO).

The following is an introduction to the measurement relaxation mechanism.

Standard version 16 (R16) introduces measurement relaxation criteria for "terminal not located at cell edge" and "low mobility", respectively.

For the criterion of "terminal not located at cell edge", the network device may configure an RSRP threshold for the criterion of "terminal not located at cell edge" and a reference signal receiving quality (RSRQ) threshold for the criterion of "terminal not located at cell edge". When an RSRP measured by the terminal device in the serving cell is greater than the RSRP threshold and an RSRQ measured by the terminal device in the serving cell is greater than the RSRQ threshold in a case where the network configures the RSRQ threshold, it is considered that the terminal device meets the criterion of "terminal not located at cell edge".

It should be noted that the RSRP threshold configured by the network for the criterion of "terminal not located at cell edge" must be less than SIntraSearchP and SnonIntraSearchP. If the network further configures the RSRQ threshold for the criterion of "terminal not located at cell edge", the RSRQ threshold for the criterion of "terminal not located at cell edge" must be less than SIntraSearchQ and SnonIntraSearchQ.

Furthermore, for the criterion of "low mobility", the network may configure an evaluation duration TSearchDeltaP for RSRP changes and an RSRP change threshold SsearchDeltaP. When the RSRP change of the terminal device in the serving cell during the TsearchDeltaP duration is less than SSearchDeltaP, it is considered that the terminal device meets the criterion of "low mobility".

When the terminal device meets the criteria of "terminal not located at cell edge" and/or "low mobility", the terminal device uses a longer measurement interval when performing RRM measurements on neighboring cell(s). A fixed scaling factor (denoted as K here) is used to increase the measurement interval, that is, neighboring cell measurements are performed once every K measurement intervals. After completing cell selection/reselection, the terminal device needs to perform normal RRM measurements for at least a duration of TSearchDeltaP.

It should be noted that R17 further enhanced the criterion of "low mobility" introduced in R16. The main change is an introduction of a second threshold SSearchDeltaP and a second TSearchDelta, to support further relaxation of measurement (reflected as a larger scaling factor) for low mobility scenarios (e.g., stationary terminals or quasi-stationary terminals).

In the research on R18 standardization version, further energy-saving processing for terminal devices will be studied in depth. At present, it is considered to introduce low power consumption/low complexity receivers into terminal devices. Such low power consumption and low complexity receivers may be referred to as auxiliary receivers, wake up radios (WURs), or LP-WURs, etc., which is not limited in the embodiments of the disclosure.

The embodiments of the disclosure are described using LP-WURs as an example.

It should be understood that LP-WURs have simple implementations and low device complexity, and may operate in an extremely low power consumption mode. The LP-WURs may continuously operate to monitor low power wake up signal (LP-WUS). When receiving the LP-WUS transmitted by the network device to the terminal device or to a terminal group to which the terminal device belongs, the LP-WUR may wake up a main radio (MR) of the terminal device, thereby achieving overall energy saving for the terminal.

After discussion, multiple types/structures/implementations of LP-WURs may be supported. The following four options are allowed for oscillator accuracy of the LP-WURs:

Option 1: a maximum frequency error of the oscillator is 200ppm, and a frequency drift of the oscillator is 0.1 ppm/s;

Option 2: the maximum frequency error of the oscillator is 50ppm, and the frequency drift of the oscillator is 0.1ppm/s;

Option 3: the maximum frequency error of the oscillator is 10ppm, and the frequency drift of the oscillator is 0.05ppm/s; and

Option 4: the maximum frequency error of the oscillator is 5ppm, and the frequency drift of the oscillator is 0.05ppm/s.

That is to say, the maximum frequency error of real time clock (RTC) in the LP-WURs is 200ppm, and the maximum frequency drift is 0.1ppm/s.

In addition, after discussion by the standards working group, a power consumption model for the LP-WURs of terminal devices may refer to Table 1.

Table 1

| Power state | Relative power consumption value (unit) | Transition energy |
|---|---|---|
| Power off | 0.001 / 0.02/ 0.1 (for 0.1, oscillator of option 3/4 cannot be used in receivers based on envelope detection) | $[T_{LR},\ \text{ramp-up}\ ^*(P_{ON}+P_{OFF})/2]$ |
| Power on | 0.01/0.05/0.1/0.2/0.5/1/2/4/10/20/30 | |

If a power consumption value of an LP-WUR in a power on state is 10/20/30, a receiver based on envelope detection cannot be used for monitoring LP-WUS. When a noise figure is less than [MR Noise figure+2.5dB], an OFDM receiver is used for monitoring LP-WUS.

If the power consumption value of the LP-WUR in the power on state is 0.2/0.5/1/2/4, other noise figures greater than [MR Noise figure+2.5dB] need to be considered when monitoring LP-WUS.

If the power consumption value of the LP-WUR in a power off state is 0.001, the oscillators of options 1, 2, 3, and 4 above are not applicable, and only the RTC can be maintained.

In addition, the standards working group further discussed RRM measurement related to LP-WUR.

For inactive (RRC_INACTIVE) state or RRC_IDLE state, studies are conducted to offload RRM measurements of the serving cell from a main radio to an LP-WUR under a certain condition, and considering relaxation of RRM measurements of the serving cell/neighboring cell(s) in the main radio.

Here, the LP-WUR may perform measurements on periodic reference signals, such as SSB, LP-WUS waveform sequences, LP-SS, etc.

The relaxation of RRM measurements for the main radio may be achieved through the following two optional approaches:

Option 1: if the relaxation of RRM measurements is considered for the main radio, a relaxed period is adopted; and

Option 2: only when an LP-WUR measurement based on the reference signal meets a certain condition, such as falling below a threshold, RRM measurements using the MR are performed.

The standards working group further discussed an activation/deactivation design for LP-WUS monitoring.

For the RRC_INACTIVE/RRC_IDLE state, the activation and deactivation of LP-WUS monitoring by the LP-WUR for the terminal device may be achieved through the following optional approaches:

Option 1: the base station transmits traditional paging indication(s) and LP-WUS. It is determined to activate and/or deactivate monitoring of the wake up signal for LP-WUS based on the implementation of the terminal device. The activation/deactivation may be performed based on a channel condition, such as whether the coverage is sufficient.

Option 2: the base station transmits traditional paging indication(s) and LP-WUS. It is determined to activate and/or deactivate monitoring of the wake up signal for LP-WUS based on a pre-configured criterion. The activation/deactivation may be performed based on a channel condition, such as whether the coverage is sufficient.

Option 3: the activation/deactivation of LP-WUS monitoring is determined based on signaling within the cell.

For the RRC_CONNECTTED state, the activation/deactivation of LP-WUS monitoring may be achieved through at least one of the following approaches:

Through RRC signaling from the base station, which may be based on or not based on UE support;

Through L1/L2 LP-WUS activation/deactivation signaling from the base station, which may be based on or not based on UE support;

Based on a pre-configured criterion, such as timer(s); or

The monitoring of LP-WUS by the terminal device is known to the base station.

In R18, it is considered that the LP-WUR has multiple structures and implementations. For example, LP-WUR implementation based on envelope detection may have lower power consumption in power off and power on states and better energy-saving gains. Alternatively, LP-WUR implementation based on OFDM signal processing, despite having higher power consumption in power off and power on states, has better frequency deviation and/or time deviation performance (lower maximum frequency offset) compared to envelope detection, and may have better LP-WUS detection performance under some conditions.

Within the current scope of research, the support of RRM measurements by auxiliary receivers, clock offset and frequency offset performance, the activation/deactivation of LP-WUS monitoring by LP-WUR, and etc. have been discussed. However, a final design for LP-WURs has not been determined, and each LP-WUR design has its own advantages. If multiple LP-WUR implementations may ultimately be supported, for the performance differences among different LP-WURs, a compatibility design for LP-WURs with different capabilities/ categories/performances in signal measurement scenarios needs to be considered.

Based on this, the embodiment of the disclosure provides a communication processing method. Here, a terminal device may determine one or more first decision thresholds and/or one or more first offset parameters associated with a type of a first receiver. The one or more first decision thresholds and/or the one or more first offset parameters are configured for performing one or more decisions related to one or more signal measurements of the first receiver. It can be seen that each type of first receiver may have associated (/matched/corresponding) first decision threshold(s) and/or first offset parameter(s). In this way, according to a type to which a first receiver of the terminal device belongs, the terminal device may select first decision threshold(s) and/or first offset parameter(s) associated with this type, to perform decision(s) related to measurement(s) based on the first decision threshold(s) and/or the first offset parameter(s). It can be seen that each type of first receiver may perform measurement decision(s) based on its associated first decision threshold(s) and/or first offset parameter(s), thereby compensating for errors in signal measurement results among different types of first receivers, enabling compatibility with different types of first receivers to a greatest extent, and maintaining system stability.

In order to facilitate the understanding of the technical solutions in the embodiments of the disclosure, the technical solutions of the disclosure are described in detail below through specific embodiments. The above related technologies, as optional solutions, may be combined arbitrarily with the technical solutions in the embodiments of the disclosure, and all of the combinations fall within the scope of protection of the embodiments of the disclosure. The embodiments of the disclosure include at least part of the following content.

FIG. 2 illustrates a communication processing method according to an embodiment of the disclosure, and the method may include the following operation S110.

At S110, a terminal device determines one or more first decision thresholds and/or one or more first offset parameters associated with a type of a first receiver. The one or more first decision thresholds and/or the one or more first offset parameters are configured for performing one or more decisions related to one or more signal measurements of the first receiver.

It should be noted that the terminal device may include at least two receivers. The at least two receivers may include a first receiver and a second receiver.

The first receiver may be a receiver with low power consumption/low complexity. The first receiver is simple to implement, has low complexity, and can operate at low power consumption. For example, the first receiver may be an auxiliary receiver, a WUR, an LP-WUR, or other low power receivers, etc., and no limits are made thereto in the embodiments of the disclosure.

In addition, the second receiver may be a receiver that has high complexity and power consumption and is configured to achieve complex signal reception. For example, the second receiver may be a main radio.

In practical applications, the terminal device may turn off the second receiver and use the first receiver with extremely low power consumption/complexity to receive a wake up signal (WUS) to wake up the second receiver, thereby reducing the power consumption of the terminal device.

It should be understood that, on one hand, the first receiver needs to monitor the wake up signal for waking up the second receiver. On the other hand, the first receiver may also have the function of RRM measurement, which may replace or assist the second receiver in RRM measurement. In this way, the relaxation processing of RRM measurements by the second receiver is realized, and the goal of energy saving for the entire terminal device is achieved.

At present, the communication network supports multiple types of first receiver implementations. For example, the first receiver may be a receiver designed based on envelope detection, or may be a receiver designed based on OFDM, etc. Different types of first receivers have differences in functions, structures, implementations, designs, capabilities, categories, and other aspects.

It should be noted that different types may also be referred to as different functions, different structures, different implementations, different designs, different capabilities, different categories, etc., and they are equivalent and interchangeable.

The differences among different types of first receivers may be reflected in one or more of the following:

The power consumption of different types of first receivers varies when they are in the power off state and/or the power on state;

Different approaches are adopted for different types of first receivers when receiving signal(s). For example, some first receivers may receive signal(s) with a manner of envelope detection, while others may receive signal(s) with a manner of OFDM signal processing (which requires performing fast Fourier transform or inverse Fourier transform, etc.). The key differences lie in power consumption, signal processing complexity, and reception performance;

Different types of first receivers use different bit widths for analog to digital converter (ADC) sampling;

Different types of first receivers support different signals for measurement, such as SSB (PSS/SSS/PBCH DMRS), LP-WUS waveform sequence, LP-SS, etc.;

Different types of first receivers use different measurement metrics for measurement. The measurement metrics include, but are not limited to, one or more of the following: a received signal strength indication (RSSI), an RSRP, a signal to interference plus noise ratio (SINR), an RSRQ, a low power RSSI (LP-RSSI), a low power RSRP (LP-RSRP), a low power SINR (LP-SINR), and a low power RSRQ (LP-RSRQ), etc.; and

Different types of first receivers have different measurement accuracy losses relative to the second receiver during signal measurement. In other words, the measurement accuracy differs among different types of first receivers.

It should be noted that due to the above differences among different types of first receivers, there are significant differences in signal measurement among different types of first receivers.

Exemplarily, the differences in channel measurement among different types of first receivers are described in detail below by taking three UEs (UE1, UE2, and UE3) located in the same position as an example. Here, UE1 is a legacy terminal device that is only equipped with an MR. UE2 and UE3 are equipped with different types of first receivers, such as UE2 equipped with WUR1 and UE3 equipped with WUR2.

When the above three UEs perform measurements on signal(s) transmitted by the same network device (the three UEs may perform measurements on the same signal, such as PSS; or the three UEs may perform measurements on different signals, such as PSS and LP-SS). Due to differences in measurement accuracy between the MR and different types of WURs, measurement results may be: RSRP_UE1>Threshold0>RSRP_UE2>RSRP_UE3. Here, RSRP_UE1 is a measurement result of UE1, RSRP_UE2 is a measurement result of UE2, and RSRP_UE3 is a measurement result of UE3.

In this example, if a same threshold is used, offset processing is not performed on the measurement results of the UEs, and decisions of the RRM measurements are performed directly or activation/deactivation decisions for LP-WUS monitoring are performed, UEs with different WURs may have different decision results even when located in the same coverage position due to different WUR designs.

It can be seen that significant measurement errors exist among different types of first receivers when performing signal measurements. Taking RSRP measurement as an example, an error range of RSRP measurement results by some types of first receivers may be [-3dB,+3dB], while an error range of RSRP measurement results by other types of first receivers may be [-5dB,+5dB]. Alternatively, when comparing a type 1 first receiver with a type 2 first receiver, there may be a difference of $\Delta S$ in their measurement results.

Since an error does not result in change of a relationship between the measurement result and the decision threshold, the impact on the communication system is generally minimal. However, if the error results in change of the relationship between the measurement result and the threshold, it may introduce certain operational risks to the system. For example, in a case where a cell handover should be triggered, the cell handover is not triggered due to the error of the measurement result. Alternatively, in a case where the first receiver should be switched to the second receiver for WUS monitoring, the first receiver is still used to monitor the WUS, causing the terminal device failing to receive paging message(s) transmitted by the network device.

Based on this, in the embodiments of the disclosure, in order to compensate for measurement errors of different types of first receivers, associated (/matched/corresponding) first decision threshold(s) and/or first offset parameter(s) may be predefined or configured for different types of first receivers.

In this way, based on a type of a first receiver of the terminal device, the terminal device may determine first decision threshold(s) and/or first offset parameter(s) associated with (/matched/corresponding to) the type of its first receiver, to perform decision(s) related to signal measurement(s) of the first receiver.

It should be noted that first decision thresholds and/or first offset parameters associated with different types of first receivers may be the same, or may be different.

It can be seen that each type of first receiver may have associated (/matched/corresponding) first decision threshold(s) and/or first offset parameter(s). In this way, according to a type to which a first receiver of the terminal device belongs, the terminal device may select first decision threshold(s) and/or first offset parameter(s) associated with this type, to perform decision(s) related to measurement(s) based on the first decision threshold(s) and/or the first offset parameter(s). It can be seen that each type of first receiver may perform measurement decision(s) based on its associated first decision threshold(s) and/or first offset parameter(s), thereby compensating for errors in signal measurement results among different types of first receivers, enabling compatibility with different types of first receivers to a greatest extent, and maintaining system stability.

It should be noted that the first offset parameter(s) and/or the first decision threshold(s) associated with the type of the first receiver may be predefined, or may be configured by the network, or may be determined by the terminal device based on a preset rule, or may be determined by the terminal device based on a predefined or network-configured mapping relationship (e.g., a mapping relationship between the type of the first receiver and the first offset parameter(s), and/or a mapping relationship between the type of the first receiver and the first decision threshold(s)), and no limits are made thereto in the embodiments of the disclosure.

The following provides a detailed description of how the first offset parameter(s) associated with the type of the first receiver is determined.

In an embodiment of the disclosure, the first receiver may support to measure one or more measurement metrics. The measurement metrics may include, but are not limited to, one or more of the following: an LP-RSSI, an LP-RSRP, an LP-SINR, and an LP-RSRQ.

In some embodiments, a number of the first offset parameter(s) associated with the type of the first receiver of the terminal device may be one or more.

In a possible implementation, a number of the first offset parameter(s) associated with the type of the first receiver of the terminal device may be one. The one first offset parameter may correspond to one or more measurement metrics.

That the one first offset parameter may correspond to one or more measurement metrics may mean that for different measurement metrics, the same value of the first offset parameter may be applied to each type of first receiver. For example, a first offset parameter corresponding to LP-RSSI may be denoted as Offset_RSSI_1, a first offset parameter corresponding to LP-RSRP may be denoted as Offset_RSRP_1, a first offset parameter corresponding to LP-SINR may be denoted as Offset_SINR_1, and a first offset parameter corresponding to LP-RSRQ may be denoted as Offset_RSRQ_1. Here, Offset_RSSI_1 = Offset_RSRP_1 = Offset_SINR_1 = Offset_RSRQ_1.

In another possible implementation, a number of the first offset parameter(s) associated with the type of the first receiver of the terminal device may be multiple, and the multiple first offset parameters may correspond to multiple measurement metrics.

That the multiple first offset parameters correspond to multiple measurement metrics may be that one first offset parameter corresponds to one measurement metric (i.e., one-to-one). Alternatively, one first offset parameter corresponds to multiple measurement metrics (i.e., one-to-many).

It may be understood that for different measurement metrics, different values of first offset parameter may be applied to each type of first receiver. For example, at least two of Offset_RSSI_1, Offset_RSRP_1, Offset_SINR_1, and Offset_RSRQ_1 are different.

In some embodiments, the one or more first offset parameters may be determined based on one or more of the following:

Predefinition;

A preset rule;

Third configuration information transmitted by a network device; the third configuration information including the one or more first offset parameters; and A first mapping relationship; the first mapping relationship representing one or more first offset parameters respectively associated with multiple types of first receivers.

In a possible implementation, the one or more first offset parameters associated with the type of the first receiver of the terminal device may be predefined, such as specified by a protocol, or implemented by pre-storing corresponding code(s) or other means in the terminal device that may be used to indicate related information.

In another possible implementation, the one or more first offset parameters associated with the type of the first receiver of the terminal device may also be determined by the terminal device itself based on a preset rule. It may be understood that the terminal device may independently determine the one or more first offset parameters based on the implementation. For example, the network may predefine or configure a range of offset parameters, and the terminal device may determine the one or more first offset parameters associated with the type of the first receiver of the terminal device within the range of offset parameters based on the implementation.

In yet another possible implementation, the one or more first offset parameters associated with the type of the first receiver of the terminal device may also be configured by the network device. Here, the terminal device may receive third configuration information transmitted by the network device, and determine each of the one or more first offset parameters associated with the type of the first receiver of the terminal device based on the third configuration information.

It should be noted that in the embodiment, the network device may acquire the type of the first receiver of the terminal device in advance. For example, the terminal device reports the type of its first receiver to the network device through capability information. In this way, the network device may configure the one or more first offset parameters associated with the type of its first receiver specifically for the terminal device. In this way, the terminal device may directly determine the one or more first offset parameters associated with the type of its first receiver based on the third configuration information.

For example, the third configuration information may be shown in Table 2.

Table 2

| Type of first receiver | Measurement metric | | | |
|---|---|---|---|---|
| | LP-RSSI | LP-RSRP | LP-SINR | LP-RSRQ |
| - | Offset_RSSI_1 | Offset_RSRP_1 | Offset_SINR_1 | Offset_RSRQ_1 |

Multiple first offset parameters associated with the type of the first receiver: Offset_RSSI_1, Offset_RSRP_1, Offset_SINR_1, and Offset_RSRQ_1, correspond to measurement metrics LP-RSSI, LP-RSRP, LP-SINR, and LP-RSRQ, respectively.

It should be noted that the third configuration information may be dynamic configuration information, semi-static configuration information, or static configuration information, and no limits are made thereto in the embodiments of the disclosure. That is to say, the network device may dynamically configure, semi-statically configure, or statically configure one or more first offset parameters associated with each type of first receiver.

In addition, the third configuration information may be carried by higher layer signaling, such as RRC signaling. The third configuration information may also be carried by physical layer signaling, such as downlink control information (DCI) or media access control (MAC) control element (CE). No limits are made thereto in the embodiments of the disclosure.

It should be further noted that the network device may transmit the third configuration information to the terminal device through groupcast/multicast or unicast, and no limits are made thereto in the embodiments of the disclosure.

In yet another possible implementation, the terminal device may determine the one or more first offset parameters associated with the type of the first receiver based on a first mapping relationship. Here, the first mapping relationship may represent one or more first offset parameters respectively associated with multiple types of first receivers.

That is to say, the terminal device may look up one or more first offset parameters associated with the type to which the first receiver of the current terminal device belongs based on the first mapping relationship.

For example, the first mapping relationship may be represented in the form of a table. The first mapping relationship may be shown in Table 3.

Table 3

| Type of first receiver | Measurement metric | | | |
|---|---|---|---|---|
| | LP-RSSI | LP-RSRP | LP-SINR | LP-RSRQ |
| Type 1 | Offset_RSSI_1 | Offset_RSRP_1 | Offset_SINR_1 | Offset_RSRQ_1 |
| Type 2 | Offset_RSSI_2 | Offset_RSRP_2 | Offset_SINR_2 | Offset_RSRQ_2 |
| Type 3 | Offset_RSSI_3 | Offset_RSRP_3 | Offset_SINR_3 | Offset_RSRQ_3 |
| • • • | • • • | • • • | • • • | • • • |

As can be seen from Table 3, if the type to which the first receiver of the terminal device belongs is type 1, the terminal device may use Table 3 to look up the first offset parameter(s) associated with type 1, which are Offset_RSSI_1, Offset_RSRP_1, Offset_SINR_1, and Offset_RSRQ_1, respectively. If the type to which the first receiver of the terminal device belongs is type 2, the terminal device may use Table 3 to look up the first offset parameter(s) associated with type 2, which are Offset_RSSI_2, Offset_RSRP_2, Offset_SINR_2, and Offset_RSRQ_2, respectively. If the type to which the first receiver of the terminal device belongs is type 3, the terminal device may use Table 3 to look up the first offset parameter(s) associated with type 3, which are Offset_RSSI_3, Offset_RSRP_3, Offset_SINR_3, and Offset_RSRQ_3, respectively.

It should be noted that Table 3 is only an implementation of the first mapping relationship, and each column or each row in Table 3 may be implemented independently.

In some embodiments, the first mapping relationship may be determined based on one or more of the following:

Predefinition;

A preset rule; and

Fourth configuration information transmitted by the network device; the fourth configuration information including the first mapping relationship.

In a possible implementation, the first mapping relationship may be predefined, such as specified by a protocol, or implemented by pre-storing corresponding codes, table, or other means in the terminal device that may be used to indicate related information.

In another possible implementation, the first mapping relationship may also be determined by the terminal device itself based on a preset rule. The terminal device may independently determine the first mapping relationship based on the implementation. For example, the network may predefine or configure multiple first mapping relationships, and the terminal device may choose one of them based on the implementation.

In yet another possible implementation, the first mapping relationship may also be configured by the network device. Here, the network device may transmit fourth configuration information, and the first mapping relationship is configured through the fourth configuration information.

It should be noted that the fourth configuration information may be dynamic configuration information, semi-static configuration information, or static configuration information, and no limits are made thereto in the embodiments of the disclosure. That is to say, the network device may dynamically configure, semi-statically configure, or statically configure the first mapping relationship.

In addition, the fourth configuration information may be carried by higher layer signaling, such as RRC signaling. The fourth configuration information may also be carried by physical layer signaling, such as downlink control information (DCI) or media access control (MAC) control element (CE). No limits are made thereto in the embodiments of the disclosure.

It should be noted that the network device may transmit the fourth configuration information to the terminal device through broadcast, groupcast/multicast or unicast, and no limits are made thereto in the embodiments of the disclosure.

It may be understood that in the embodiment, the network device does not need to acquire the type of the first receiver of each terminal device. The network device may configure one or more first offset parameters respectively associated with multiple types of first receivers for the terminal device. In this way, the terminal device may select one or more appropriate first offset parameters based on the type of its first receiver, thereby achieving decision(s) related to measurement(s).

In some embodiments, a number of first mapping relationship(s) may be one or more. When multiple first mapping relationships exist, the network device may indicate to the terminal device a first mapping relationship that is actually used.

In summary, the terminal device may determine the one or more first offset parameters associated with the first receiver through various different ways, thereby improving the flexibility of system parameter configuration.

The following provides a detailed description of how the first decision threshold(s) associated with the type of the first receiver is determined.

In some embodiments, a number of the first decision threshold(s) associated with the type of the first receiver of the terminal device may be one or more.

In a possible implementation, a number of the first decision threshold(s) associated with the type of the first receiver of the terminal device is one, and the one first decision threshold is configured for decision(s) of one or more measurement metrics.

It may be understood that when multiple measurement metrics exist, decisions by the terminal device on the multiple measurement metrics may be based on a same first decision threshold.

For example, a first decision threshold corresponding to LP-RSSI may be denoted as RSSI_Threshold_1, a first decision threshold corresponding to LP-RSRP may be denoted as RSRP_Threshold_1, a first decision threshold corresponding to LP-SINR may be denoted as SINR_Threshold_1, and a first decision threshold corresponding to LP-RSRQ may be denoted as RSRQ_Threshold_1. Here, RSSI_Threshold_1 = RSRP_Threshold_1 = SINR_Threshold_1 = RSRQ_Threshold_1.

In another possible implementation, a number of the first decision threshold(s) associated with the type of the first receiver of the terminal device is multiple, and the multiple first decision thresholds are associated with multiple measurement metrics. The first decision thresholds are configured for decisions of the measurement metrics associated with the first decision thresholds.

That the multiple first decision thresholds are associated with multiple measurement metrics may mean that one first decision threshold is associated with one measurement metric (i.e., one-to-one), that is, decisions are performed by using different first decision thresholds for different measurement metrics. Alternatively, one first decision threshold is associated with multiple measurement metrics (i.e., one-to-many), that is, a same first decision threshold may be used for different measurement metrics, or different first decision thresholds may be used for different measurement metrics.

For example, at least two of RSSI_Threshold_1, RSRP_Threshold_1, SINR_Threshold_1, and RSRQ_Threshold_1 are different.

In some embodiments, the one or more first decision thresholds may be determined based on one or more of the following:

Predefinition;

A preset rule;

Fifth configuration information transmitted by a network device; the fifth configuration information including the one or more first decision thresholds;

A second mapping relationship; the second mapping relationship representing one or more first decision thresholds respectively associated with multiple types of first receivers; and

A third mapping relationship and a third offset parameter; the third mapping relationship representing one or more decision thresholds associated with a baseline type.

In a possible implementation, the one or more first decision thresholds associated with the type of the first receiver of the terminal device may be predefined, such as specified by a protocol, or implemented by pre-storing corresponding code(s) or other means in the terminal device that may be used to indicate related information.

In another possible implementation, the one or more decision thresholds associated with the type of the first receiver of the terminal device may also be determined by the terminal device itself based on a preset rule. It may be understood that the terminal device may independently determine the one or more first decision thresholds based on the implementation. For example, the network may predefine or configure a range of decision thresholds, and the terminal device may determine the one or more first decision thresholds associated with the type of the first receiver of the terminal device within the range of decision thresholds based on the implementation.

In yet another possible implementation, the one or more decision thresholds associated with the type of the first receiver of the terminal device may be configured by the network device. Here, the terminal device may receive fifth configuration information transmitted by the network device, and the network device configures the one or more first decision thresholds associated with the type of its first receiver for the terminal device through the fifth configuration information.

It should be noted that in the embodiment, the network device may acquire the type of the first receiver of the terminal device in advance. For example, the terminal device reports the type of its first receiver to the network device through capability information. In this way, the network device may configure the one or more first decision thresholds associated with the type of its first receiver specifically for the terminal device. In this way, the terminal device may directly determine the one or more first offset parameters associated with the type of its first receiver based on the fifth configuration information.

The fifth configuration information may be dynamic configuration information, semi-static configuration information, or static configuration information, and no limits are made thereto in the embodiments of the disclosure. That is to say, the network device may dynamically configure, semi-statically configure, or statically configure one or more first decision thresholds associated with each type of first receiver.

In addition, the fifth configuration information may be carried by higher layer signaling, such as RRC signaling. The third configuration information may also be carried by physical layer signaling, such as DCI or MAC CE. No limits are made thereto in the embodiments of the disclosure.

It should be further noted that the network device may transmit the third configuration information to the terminal device through groupcast/multicast or unicast, and no limits are made thereto in the embodiments of the disclosure.

In yet another possible implementation, the terminal device may determine the one or more first decision thresholds associated with the type of the first receiver based on a second mapping relationship. Here, the second mapping relationship may represent one or more first decision thresholds respectively associated with multiple types of first receivers.

It may be understood that the terminal device may look up one or more first decision thresholds associated with the type to which the first receiver of the current terminal device belongs based on the second mapping relationship.

For example, the second mapping relationship may be represented in the form of a table. The second mapping relationship may be shown in Table 4.

Table 4

| Type of first receiver | Measurement metric | | | |
|---|---|---|---|---|
| | First decision threshold for LP-RSSI | First decision threshold for LP-RSRP | First decision threshold for LP-SINR | First decision threshold for LP-RSRQ |
| Type 1 | LP-RSSI _Threshold1 | LP-RSRP _Threshold1 | LP-SINR _Threshold1 | LP-RSRQ _Threshold1 |
| Type 2 | LP-RSSI _Threshold2 | LP-RSRP _Threshold2 | LP-SINR _Threshold2 | LP-RSRQ_ Threshold2 |
| Type 3 | LP-RSSI _Threshold3 | LP-RSRP _Threshold3 | LP-SINR _Threshold3 | LP-RSRQ _Threshold3 |
| … | … | … | … | … |

As can be seen from Table 4, if the type to which the first receiver of the terminal device belongs is type 1, the terminal device may determine through Table 4 that a first decision threshold for LP-RSSI is LP-RSSI_Threshold1, a first decision threshold for LP-RSRP is LP-RSRP_Threshold1, a first decision threshold for LP-SINR is LP-SINR_Threshold1, and a first decision threshold for LP-RSRQ is LP-RSRQ_Threshold1. In addition, if the type to which the first receiver of the terminal device belongs is type 2, the terminal device may determine through Table 4 that a first decision threshold for LP-RSSI is LP-RSSI_Threshold2, a first decision threshold for LP-RSRP is LP-RSRP_Threshold2, a first decision threshold for LP-SINR is LP-SINR_Threshold2, and a first decision threshold for LP-RSRQ is LP-RSRQ_Threshold2.

It should be noted that Table 4 is only an implementation of the second mapping relationship, and each column or each row in Table 4 may be implemented independently.

In some embodiments, the second mapping relationship may be determined based on one or more of the following:

Predefinition;

A preset rule; and

Sixth configuration information transmitted by the network device; the sixth configuration information including the second mapping relationship.

In a possible implementation, the second mapping relationship may be predefined, such as specified by a protocol, or implemented by pre-storing corresponding codes, table, or other means in the terminal device that may be used to indicate related information.

In another possible implementation, the second mapping relationship may also be determined by the terminal device itself based on a preset rule. The terminal device may independently determine the second mapping relationship based on the implementation. For example, the network may predefine or configure multiple second mapping relationships, and the terminal device may choose one of them based on the implementation.

In yet another possible implementation, the first mapping relationship may also be configured by the network device. Here, the network device may transmit sixth configuration information, and the second mapping relationship is carried through the sixth configuration information.

It may be understood that in the embodiment, the network device does not need to acquire the type of the first receiver of each terminal device. The network device may configure one or more first decision thresholds respectively associated with multiple types of first receivers for the terminal device. In this way, the terminal device may select one or more appropriate first decision thresholds based on the type of its first receiver, thereby achieving decision(s) related to measurement(s).

In some embodiments, a number of second mapping relationship(s) may be one or more. When multiple second mapping relationships exist, the network device may indicate to the terminal device a second mapping relationship that is actually used.

In a possible implementation, the terminal device may also determine the one or more first decision thresholds associated with the type of its first receiver based on a third mapping relationship and a third offset parameter. Here, the third mapping relationship represents one or more decision thresholds associated with a baseline type.

It may be understood that the terminal device may determine the one or more first decision thresholds associated with the type to which its first receiver belongs based on the one or more decision thresholds associated with the baseline type and the third offset parameter.

The one or more first decision thresholds associated with the type to which the first receiver of the terminal device belongs may be sum(s) of the one or more decision thresholds associated with the baseline type and the third offset parameter, or difference(s) between the one or more decision thresholds associated with the baseline type and the third offset parameter. No limits are made thereto in the embodiments of the disclosure.

For example, the third mapping relationship may refer to Table 5.

Table 5

| Measurement metric for baseline type | | | |
|---|---|---|---|
| Decision threshold for LP-RSSI | Decision threshold for LP-RSRP | Decision threshold for LP-SINR | Decision threshold for LP-RSRQ |
| LP-RSSI_ baseline _Threshold1 | LP-RSRP_ baseline _Threshold1 | LP-SINR_ baseline _Threshold1 | LP-RSRQ_ baseline _Threshold1 |

Referring to Table 5, when the third offset parameter is $\Delta S$, the terminal device may determine that the first decision threshold(s) associated with the type to which the first receiver belongs may include: LP-RSSI_baseline_Threshold1 + ΔS (or LP-RSSI_baseline_Threshold1 - ΔS), LP-RSRP_baseline_Threshold1 + ΔS (or LP-RSRP_baseline_Threshold1 - ΔS), LP-SINR_ baseline_Threshold1 + ΔS (or LP-SINR_baseline_Threshold1 - ΔS), and LP-RSRQ_baseline_ Threshold1 + ΔS (or LP-RSRQ_baseline_Threshold1 - ΔS).

It should be noted that the third offset parameter is related to the type to which the first receiver of the terminal device belongs, and different types of first receivers are associated with different third offset parameters.

In some embodiments, the third mapping relationship and/or the third offset parameter may be determined based on one or more of the following:

Predefinition;

A preset rule; and

Sixth configuration information transmitted by the network device; the sixth configuration information including the third mapping relationship and/or the third offset parameter.

In a possible implementation, the third mapping relationship and/or the third offset parameter may be predefined, such as specified by a protocol, or implemented by pre-storing corresponding code(s), table(s), or other means in the terminal device that may be used to indicate related information.

In another possible implementation, the third mapping relationship and/or the third offset parameter may also be determined by the terminal device itself based on a preset rule. The terminal device may independently determine the third mapping relationship and/or the third offset parameter based on the implementation. For example, the network may predefine or configure multiple third mapping relationships, and the terminal device may choose one of them based on the implementation. The network may predefine or configure a range of offset parameters, and the terminal device may choose a third offset parameter that is actually used within the range of offset parameters based on the implementation.

In yet another possible implementation, the third mapping relationship and/or the third offset parameter may also be configured by the network device. Here, the network device may transmit sixth configuration information, and the third mapping relationship and/or the third offset parameter is carried through the sixth configuration information.

It should be noted that the sixth configuration information may be dynamic configuration information, semi-static configuration information, or static configuration information. No limits are made thereto in the embodiments of the disclosure.

In addition, the sixth configuration information may be carried by higher layer signaling, such as RRC signaling. The sixth configuration information may also be carried by physical layer signaling, such as DCI, MAC CE signaling. No limits are made thereto in the embodiments of the disclosure.

It should be noted that the network device may transmit the sixth configuration information to the terminal device through broadcast, groupcast/multicast or unicast, and no limits are made thereto in the embodiments of the disclosure.

In summary, the terminal device may determine the one or more first decision thresholds associated with the first receiver through various different ways, thereby improving the flexibility of system parameter configuration.

It should be noted that one or more of the third configuration information, the fourth configuration information, the fifth configuration information, and the sixth configuration information mentioned above may be configured by the network device to the terminal device through the same information, or may be configured by the network device to the terminal device through independent information. No limits are made thereto in the embodiments of the disclosure.

In the embodiments of the disclosure, the terminal device may perform decision(s) related to signal measurement(s) of the first receiver based on the determined first decision threshold(s) and/or first offset parameter(s) associated with the type of the first receiver. There are multiple approaches for the terminal device to perform the decision(s) based on the first decision threshold(s) and/or the first offset parameter(s). The following introduces three of these approaches.

Approach 1

In some embodiments, as shown in FIG. 3, a communication processing method according to an embodiment of the disclosure may further include the following operation S120A.

At S 120A, the terminal device performs the one or more decisions related to the one or more signal measurements of the first receiver based on the one or more first offset parameters and one or more second decision thresholds. Different types of first receivers all perform decisions based on the one or more second decision thresholds.

It should be understood that in approach 1, for different types of first receivers, a same decision threshold (referred to as a second decision threshold in the embodiment of the disclosure) and different offset parameters may be used to perform decisions related to signal measurements of the first receiver.

In other words, a same second decision threshold may be set for different types of first receivers. For different types of first receivers, decision(s) related to signal measurement(s) of a respective first receiver may be performed based on the second decision threshold and respective first offset parameter(s) associated with the first receiver.

In some embodiments, a number of second decision threshold(s) may be one or more.

In a possible implementation, in a case where a number of second decision threshold(s) is one, the one second decision threshold may be configured for performing decision(s) on one or more measurement metrics.

It may be understood that in the case where the number of the second decision threshold(s) is one, if there is one measurement metric, a decision on the measurement metric may be based on the one second decision threshold set above. If there are multiple measurement metrics, decisions on the multiple measurement metrics may be based on a same second decision threshold.

In another possible implementation, a number of second decision threshold(s) is multiple. The multiple second decision thresholds here may be associated with multiple measurement metrics. Here, the second decision thresholds are configured for performing decisions on the measurement metrics associated with the second decision thresholds.

An association relationship between multiple second decision thresholds and multiple measurement metrics may be that one second decision threshold is associated with one measurement metric (i.e., one-to-one association), that is, for different measurement metrics, different second decision thresholds are used for decisions. The association relationship between multiple second decision thresholds and multiple measurement metrics may also be that one second decision threshold is associated with multiple measurement metrics (i.e., one-to-many association), that is, for different measurement metrics, a same first decision threshold may be used, or different second decision thresholds may be used.

It should be noted that one measurement metric may be associated with only one second decision threshold.

It may be understood that when there are multiple measurement metrics, for each measurement metric, a second decision threshold associated with the measurement metric may be used for the decision. That is to say, the second decision threshold may be independently set for each measurement metric. Second decision thresholds respectively associated with measurement metrics may be the same or different, and no limits are made thereto in the embodiments of the disclosure.

It should be noted that in the case where the number of second decision threshold(s) is multiple, second decision thresholds associated with a same measurement metric are the same in different types of first receivers.

That is to say, for a same measurement metric, a same threshold may be set for different types of first receivers. For example, a second decision threshold LP-RSSI_Threshold is set for the measurement metric LP-RSSI, a second decision threshold LP-RSRP_Threshold is set for the measurement metric LP-RSRP, a second decision threshold LP-SINR_Threshold is set for the measurement metric LP-SINR, and a second decision threshold LP-RSRQ_Threshold is set for the measurement metric LP-RSRQ.

In some embodiments, the one or more second decision thresholds are determined based on one or more of the following:

Predefinition;

A preset rule;

First configuration information transmitted by a network device; the first configuration information including the one or more second decision thresholds; and

A baseline decision threshold and/or one or more second offset parameters corresponding to the one or more measurement metrics respectively associated with the one or more second decision thresholds.

In a possible implementation, the one or more second decision thresholds may be predefined, such as specified by a protocol, or implemented by pre-storing corresponding code(s) or other means in the terminal device that may be used to indicate related information.

In another possible implementation, the one or more second decision thresholds may also be determined by the terminal device itself based on a preset rule. It may be understood that the terminal device may independently determine the one or more second decision thresholds based on the implementation. For example, the network device may configure a range of thresholds, and the terminal device may determine the one or more second decision thresholds within the range of thresholds based on the implementation.

In yet another possible implementation, the one or more second decision thresholds may also be configured by the network device. Here, the terminal device may receive first configuration information transmitted by the network device, and the one or more second decision thresholds are configured through the first configuration information.

It should be noted that the first configuration information may be dynamic configuration information, semi-static configuration information, or static configuration information, and no limits are made thereto in the embodiments of the disclosure. That is to say, the network device may dynamically configure, semi-statically configure, or statically configure the one or more second decision thresholds.

In addition, the first configuration information may be carried by higher layer signaling, such as RRC signaling. The first configuration information may also be carried by physical layer signaling, such as DCI or MAC CE signaling. No limits are made thereto in the embodiments of the disclosure.

It should be further noted that the network device may transmit the first configuration information to the terminal device through broadcast, groupcast/multicast or unicast, and no limits are made thereto in the embodiments of the disclosure.

In a possible implementation, the one or more second decision thresholds may also be determined based on a baseline decision threshold and/or one or more second offset parameters corresponding to the one or more measurement metrics respectively associated with the one or more second decision thresholds.

Here, corresponding second offset parameter(s) may be respectively set for one or more measurement metrics supported by the first receiver. Second decision threshold(s) actually used for multiple measurement metrics may be determined based on the baseline decision threshold and second offset parameters corresponding to the multiple measurement metrics.

For example, the baseline decision threshold is denoted as baseline_Threshold. If a second offset parameter corresponding to LP-RSSI is Offset_RSSI, a second decision threshold actually used for LP-RSSI may be a sum of the baseline measurement threshold and the second offset parameter, i.e., LP-RSSI_Threshold = baseline_Threshold + Offset_RSSI, or the second decision threshold is a difference between the baseline decision threshold and the second offset parameter, i.e., LP-RSSI_Threshold = baseline_Threshold - Offset_RSSI. If a second offset parameter corresponding to LP-RSRP is Offset_RSRP, a second decision threshold actually used for LP-RSRP may be baseline_Threshold + Offset_RSRP, or baseline_Threshold - Offset_RSRP.

In some embodiments, the baseline decision threshold and/or the one or more second offset parameters corresponding to the one or more measurement metrics respectively associated with the one or more second decision thresholds are determined based on one or more of the following:

Predefinition;

A preset rule; and

Second configuration information transmitted by the network device; the second configuration information including the baseline decision threshold and/or the one or more second offset parameters corresponding to the one or more measurement metrics respectively associated with the one or more second decision thresholds.

In a possible implementation, the baseline decision threshold and/or the second offset parameter corresponding to each measurement metric may be predefined, such as specified by a protocol, or implemented by pre-storing corresponding code(s) or other means in the terminal device that may be used to indicate related information.

In another possible implementation, the baseline decision threshold and/or the second offset parameter corresponding to each measurement metric may also be determined by the terminal device itself based on a preset rule. It may be understood that the terminal device may independently determine the baseline decision threshold and/or the second offset parameter corresponding to each measurement metric based on the implementation. For example, the network device may configure a range of thresholds, and the terminal device may determine a baseline measurement threshold within the range of thresholds based on the implementation. Similarly, the network device may configure an offset range, and the terminal device may determine the second offset parameter corresponding to each measurement metric within the offset range based on the implementation.

In yet another possible implementation, the baseline measurement threshold and/or the second offset parameter corresponding to each measurement metric may also be configured by the network device. Here, the terminal device may receive second configuration information transmitted by the network device, and the second configuration information may include the baseline decision threshold and/or the one or more second offset parameters corresponding to the one or more measurement metrics respectively associated with the one or more second decision thresholds.

It should be noted that the second configuration information may be dynamic configuration information or semi-static configuration information, and no limits are made thereto in the embodiments of the disclosure. In addition, the second configuration information may be carried by higher layer signaling, such as RRC signaling. The second configuration information may also be carried by physical layer signaling, such as DCI or MAC CE signaling. No limits are made thereto in the embodiments of the disclosure. Furthermore, the network device may transmit the first configuration information to the terminal device through broadcast, groupcast/multicast or unicast, and no limits are made thereto in the embodiments of the disclosure.

As can be seen from the above, when there are multiple measurement metrics, each measurement metric may be individually configured with a second decision threshold. Each measurement metric may also be configured with only one baseline decision threshold. In an example, for each measurement metric, the baseline decision threshold is taken as the second decision threshold that is actually used, and the actual second decision threshold for each measurement metric is the same threshold. In another example, the second decision threshold actually used for each measurement metric may be determined based on the corresponding second offset parameter and the baseline decision threshold.

In some embodiments, the one or more second decision thresholds may be reused legacy threshold(s), dedicated threshold(s) configured for the first receiver, or threshold(s) obtained from legacy threshold(s) through offset value(s). No limits are made thereto in the embodiments of the disclosure.

It should be noted that in approach 1 of the embodiments of the disclosure, for different categories of first receivers, each first receiver may adjust, based on "first offset parameter(s)" associated with its category, signal measurement result(s) of the first receiver, or second decision threshold(s), or both the signal measurement result(s) of the first receiver and the second decision threshold(s). In this way, the terminal device may perform decision(s) related to signal measurement(s) of the first receiver based on adjusted measurement result(s) and/or adjusted second decision threshold(s).

In a possible implementation, the operation S120A that the terminal device performs the one or more decisions related to the one or more signal measurements of the first receiver based on the one or more first offset parameters and the one or more second decision thresholds may be achieved through the following manner.

The terminal device adjusts one or more measurement results of the first receiver based on the one or more first offset parameters, to obtain one or more adjusted measurement results; and

The terminal device performs one or more decisions on the one or more adjusted measurement results based on the one or more second decision thresholds.

It may be understood that in this implementation, the terminal device may adjust the measurement result(s) of the first receiver based on the first offset parameter(s) associated with the type of the first receiver.

For example, the adjusted measurement result(s) is/are taken as the final measurement result(s). Here, a final measurement result may be any of the following:

$$\text{Final measurement result} = \text{Actual measurement result} + \text{First offset parameter;}$$

$$\text{Final measurement result} = \text{Actual measurement result} - \text{First offset parameter;}$$

Final measurement result = Actual measurement result + First offset parameter * Scaling factor;

and Final measurement result = Actual measurement result - First offset parameter * Scaling factor.

It should be noted that value(s) of the first offset parameter(s) may be positive or negative, and no limits are made thereto in the embodiments of the disclosure.

In addition, the scaling factor may be predefined, or may be configured by the network device, and no limits are made thereto in the embodiments of the disclosure.

In the embodiment of the disclosure, the terminal device may compare the adjusted measurement result(s) with the second decision threshold(s), to obtain the decision result(s).

In some embodiments, when there are multiple measurement metrics, the terminal device may acquire an actual measurement result for each measurement metric. For each measurement metric, the terminal device may adjust the actual measurement result for the measurement metric based on the first offset parameter corresponding to the measurement metric, to obtain a final measurement result for the measurement metric. Here, a determination manner of the first offset parameter may refer to the description in the above embodiments, which is not repeated herein for the sake of brevity.

For example, measurement metrics supported by the first receiver of the terminal device may include LP-RSSI, LP-RSRP, LP-SINR, and LP-RSRQ. Based on this, the first receiver of the terminal device may measure a specific reference signal (such as WUS, LP-SS, etc.), to obtain an LP-RSSI measurement value, an LP-RSRP measurement value, an LP-SINR measurement value, and an LP-RSRQ measurement value for the specific reference signal. The terminal device determines that first offset parameters associated with the type of the first receiver include Offset_RSSI_1, Offset_RSRP_1, Offset_SINR_1, and Offset_RSRQ_1. Here, Offset_RSSI_1 is the first offset parameter corresponding to LP-RSSI, Offset_RSRP_1 is the first offset parameter corresponding to LP-RSRP, Offset_SINR_1 is the first offset parameter corresponding to LP-SINR, and Offset_RSRQ_1 is the first offset parameter corresponding to LP-RSRQ.

Here, Offset_RSSI_1, Offset_RSRP_1, Offset_SINR_1, and Offset_RSRQ_1 may be the same or different.

A final measurement result for LP-RSSI = LP-RSSI measurement value +/-Offset_RSSI_1. A final measurement result for LP-RSRP = LP-RSRP measurement value +/-Offset_RSRP_1. A final measurement result for LP-SINR = LP-SINR measurement value +/-Offset_SINR_1. A final measurement result for LP-RSRQ = LP-RSRQ measurement value +/-Offset_RSRQ_1.

Furthermore, the terminal device may compare the final measurement result of each measurement metric with the second decision threshold associated with the measurement metric. Here, a manner of determining the second decision threshold associated with each measurement metric may refer to the description in the above embodiments, which is not repeated herein for the sake of brevity.

For example, second decision thresholds respectively associated with the measurement metrics may include LP-RSSI_Threshold, LP-RSRP_Threshold, LP-SINR_Threshold, and LP-RSRQ_Threshold. Here, LP-RSSI_Threshold, LP-RSRP_Threshold, LP-SINR_Threshold, and LP-RSRQ_Threshold may be the same or different, and no limits are made thereto in the embodiments of the disclosure. Based on this, the terminal device may compare the final measurement result for LP-RSSI with LP-RSSI_Threshold to obtain a decision result for LP-RSSI. The terminal device may compare the final measurement result for LP-RSRP with LP-RSRP_Threshold to obtain a decision result for LP-RSRP. The terminal device may compare the final measurement result for LP-SINR with LP-SINR_Threshold to obtain a decision result for LP-SINR. The terminal device may compare the final measurement result for LP-RSRQ with LP-RSRQ_Threshold to obtain a decision result for LP-RSRQ.

In summary, the terminal device may adjust the measurement result(s) of the first receiver based on the first offset parameter(s) associated with the type of its first receiver to obtain the adjusted measurement result(s), and perform decision(s) on the adjusted measurement result(s) based on the second decision threshold(s), thereby compensating for measurement performance errors among different types of first receivers, enabling compatibility with different types of first receivers to a greatest extent, and maintaining system stability.

In another possible implementation, the operation S120A that the terminal device performs the one or more decisions related to the one or more signal measurements of the first receiver based on the one or more first offset parameters and the one or more second decision thresholds may be achieved through the following manner.

The terminal device adjusts the one or more second decision thresholds based on the one or more first offset parameters, to obtain one or more adjusted second decision thresholds; and

The terminal device performs one or more decisions on one or more measurement results of the first receiver based on the one or more adjusted second decision thresholds.

It may be understood that in this implementation, the terminal device may adjust the second decision threshold(s) based on the first offset parameter(s) associated with the type of the first receiver, and compare the adjusted second decision threshold(s) with the actual measurement result(s) of the first receiver to obtain decision result(s).

For example, the adjusted second decision threshold(s) is taken as the final decision threshold(s). Here, a final decision threshold may be any of the following:

$$\text{Final decision threshold} = \text{Second decision threshold} + \text{First offset parameter;}$$

$$\text{Final decision threshold} = \text{Second decision threshold} - \text{First offset parameter;}$$

Final decision threshold = Second decision threshold + First offset parameter * Scaling factor;

and Final decision threshold = Second decision threshold - First offset parameter * Scaling factor.

It should be noted that value(s) of the first offset parameter(s) may be positive or negative, and no limits are made thereto in the embodiments of the disclosure.

The scaling factor may be predefined, or may be configured by the network device, and no limits are made thereto in the embodiments of the disclosure.

In the embodiment of the disclosure, the terminal device may compare the measurement result(s) actually measured with the final decision threshold(s) to obtain the decision result(s).

In some embodiments, when there are multiple measurement metrics, the terminal device may acquire the second decision threshold associated with each measurement metric. For each measurement metric, the terminal device may adjust the second decision threshold associated with the measurement metric based on the first offset parameter corresponding to the measurement metric, to obtain the final decision threshold for the measurement metric. Here, manners of determining the first offset parameter and the second decision threshold may refer to the description in the above embodiments, which are not repeated herein for the sake of brevity.

For example, measurement metrics supported by the first receiver of the terminal device may include LP-RSSI, LP-RSRP, LP-SINR, and LP-RSRQ. Second decision thresholds associated with the measurement metrics are LP-RSSI_Threshold, LP-RSRP_Threshold, LP-SINR_Threshold, and LP-RSRQ_Threshold, respectively. The terminal device determines that first offset parameters associated with the type of the first receiver include Offset_RSSI_1, Offset_RSRP_1, Offset_SINR_1, and Offset_RSRQ_1. Here, Offset_RSSI_1 is the first offset parameter corresponding to LP-RSSI, Offset_RSRP_1 is the first offset parameter corresponding to LP-RSRP, Offset_SINR_1 is the first offset parameter corresponding to LP-SINR, and Offset_RSRQ_1 is the first offset parameter corresponding to LP-RSRQ.

Here, Offset_RSSI_1, Offset_RSRP_1, Offset_SINR_1, and Offset_RSRQ_1 may be the same or different.

A final decision threshold for LP-RSSI = LP-RSSI_Threshold +/- Offset_RSSI_1. A final decision threshold for LP-RSRP = LP-RSRP_Threshold +/- Offset_RSRP_1. A final decision threshold for LP-SINR = LP-SINR_Threshold +/- Offset_SINR_1. A final decision threshold for LP-RSRQ = LP-RSRQ_Threshold +/- Offset_RSRQ_1.

In practical applications, the terminal device may measure a specific reference signal (such as WUS, LP-SS, etc.) through the first receiver, to obtain an LP-RSSI measurement value, an LP-RSRP measurement value, an LP-SINR measurement value, and an LP-RSRQ measurement value for the specific reference signal.

Furthermore, the terminal device may compare the measurement result of each measurement metric with the actual decision threshold associated with the measurement metric. Here, the terminal device may compare the LP-RSSI measurement value with the final decision threshold for LP-RSSI, to obtain a decision result for LP-RSSI. The terminal device may compare the LP-RSRP measurement value with the final decision threshold for LP-RSRP, to obtain a decision result for LP-RSRP. The terminal device may compare the LP-SINR measurement value with the final decision threshold for LP-SINR, to obtain a decision result for LP-SINR. The terminal device may compare the LP-RSRQ measurement value with the final decision threshold for LP-SINR, to obtain a decision result for LP-RSRQ.

In summary, the terminal device may adjust the second decision threshold(s) based on the first offset parameter(s) associated with the type of the first receiver, and compare the adjusted second decision threshold(s) with the actual measurement result(s) of the first receiver to obtain the decision result(s), thereby compensating for measurement performance errors among different types of first receivers, enabling compatibility with different types of first receivers to a greatest extent, and maintaining system stability.

In yet another possible implementation, the operation S120A that the terminal device performs the one or more decisions related to the one or more signal measurements of the first receiver based on the one or more first offset parameters and the one or more second decision thresholds may be achieved through the following manner.

The terminal device adjusts the one or more second decision thresholds based on the one or more first offset parameters, to obtain one or more adjusted second decision thresholds, and adjusts one or more measurement results of the first receiver based on the one or more first offset parameters, to obtain one or more adjusted measurement results; and

The terminal device performs one or more decisions on the one or more adjusted measurement results based on the one or more adjusted second decision thresholds.

It may be understood that in this implementation, the terminal device may adjust the actual measurement result(s) of the first receiver and the second decision threshold(s) based on the first offset parameter(s) associated with the type of the first receiver, and compare the adjusted measurement result(s) with the adjusted second decision threshold(s) to obtain decision result(s).

For example, the adjusted measurement result(s) is taken as the final measurement result(s). Here, a final measurement result may be any of the following:

$$\text{Final measurement result = Actual measurement result + First offset parameter;}$$

$$\text{Final measurement result = Actual measurement result - First offset parameter;}$$

Final measurement result = Actual measurement result + First offset parameter * Scaling factor 1;

and Final measurement result = Actual measurement result - First offset parameter * Scaling factor 1.

In addition, the adjusted second decision threshold(s) is/are taken as the final decision threshold(s). Here, a final decision threshold may be any of the following:

$$\text{Final decision threshold} = \text{Second decision threshold} + \text{First offset parameter;}$$

$$\text{Final decision threshold} = \text{Second decision threshold} - \text{First offset parameter;}$$

Final decision threshold = Second decision threshold + First offset parameter * Scaling factor 2;

and Final decision threshold = Second decision threshold - First offset parameter * Scaling factor 2.

Here, the scaling factor 1 and/or the scaling factor 2 may be predefined, or may be configured by the network device, and no limits are made thereto in the embodiments of the disclosure. The scaling factor 1 and/or the scaling factor 2 may be the same or different.

It should be noted that the way that the terminal device adjusts the actual measurement result(s) based on the first offset parameter(s) may be different from the way that the terminal device adjusts the second decision threshold(s) based on the first offset parameter(s). For example, when adjusting an actual measurement result based on the first offset parameter (e.g., final measurement result = actual measurement result + first offset parameter), the second decision threshold may be adjusted based on the first offset parameter and the scaling factor 2 (e.g., final decision threshold = second decision threshold + first offset parameter * scaling factor 2).

In some embodiments, when there are multiple measurement metrics, the terminal device may acquire the second decision threshold associated with each measurement metric. For each measurement metric, the terminal device may adjust the second decision threshold associated with the measurement metric based on the first offset parameter corresponding to the measurement metric, to obtain the final decision threshold for the measurement metric. The terminal device may further acquire the actual measurement result of each measurement metric. For each measurement metric, the terminal device may adjust the actual measurement result of the measurement metric based on the first offset parameter corresponding to the measurement metric, to obtain the final measurement result of the measurement metric. In this way, the terminal device may compare the final measurement result of each measurement metric with the final decision threshold of the measurement metric, to obtain the decision result of the measurement metric.

In summary, the terminal device may adjust the second decision threshold(s) and the measurement result(s) based on the first offset parameter(s) associated with the type of the first receiver, and compare the adjusted second decision threshold(s) with the adjusted measurement result(s) to obtain the decision result(s), thereby compensating for measurement performance errors among different types of first receivers, enabling compatibility with different types of first receivers to a greatest extent, and maintaining system stability.

Approach 2

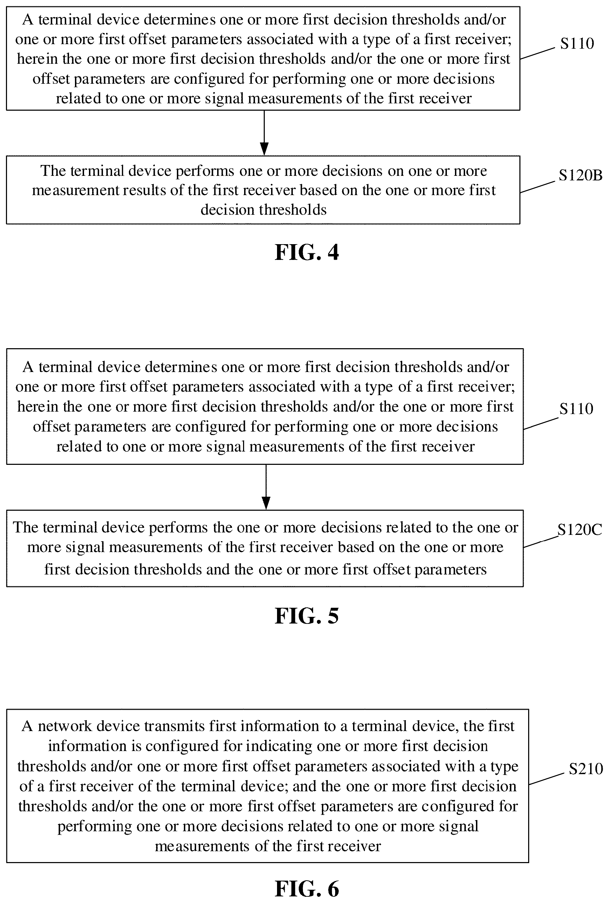

In some embodiments, as shown in FIG. 4, a communication processing method according to an embodiment of the disclosure may further include the following operation S120B.

At S120B, the terminal device performs one or more decisions on one or more measurement results of the first receiver based on the one or more first decision thresholds.

In the embodiment of the disclosure, the terminal device may acquire the first decision threshold(s) associated with the type of its first receiver, and directly compare the actual measurement result(s) of the first receiver with the determined first decision threshold(s), to obtain the decision result(s).

It should be understood that in the above approach 1, a same second decision threshold may be set for different types of first receivers. For different types of first receivers, decision(s) related to signal measurement(s) of each first receiver may be performed based on the second decision threshold and the first offset parameter(s) associated with the first receiver.

In approach 2, it may not be necessary to introduce the first offset value(s) associated with each type of first receiver. The first decision threshold(s) associated with each type of first receiver may be explicitly configured for the terminal device through being configured by the network device and/or predefined, and the terminal device may not perform offset processing. The actual measurement result(s) of the first receiver may be directly compared with the first decision threshold(s) associated with that type of receiver.

It should be noted that the way that the terminal device determines the first decision threshold(s) associated with the type of its first receiver may refer to the description in the above embodiments, which is not repeated herein for the sake of brevity.

In some embodiments, when there are multiple measurement metrics, the terminal device may acquire the first decision threshold associated with each measurement metric. For each measurement metric, the terminal device may compare the actual measurement result of the measurement metric with the first decision threshold associated with the measurement metric, to obtain the decision result of the measurement metric.

For example, measurement metrics supported by the first receiver of the terminal device may include LP-RSSI, LP-RSRP, LP-SINR, and LP-RSRQ. Based on this, the first receiver of the terminal device may measure a specific reference signal (such as WUS, LP-SS, etc.), to obtain an LP-RSSI measurement value, an LP-RSRP measurement value, an LP-SINR measurement value, and an LP-RSRQ measurement value for the specific reference signal. The terminal device determines that first decision thresholds associated with the type of the first receiver are LP-RSSI_Threshold1, LP-RSRP_Threshold1, LP-SINR_Threshold1, and LP-RSRQ_Threshold1, respectively.

Based on this, the terminal device may compare the LP-RSSI measurement value with LP-RSSI_Threshold1, to obtain a decision result for LP-RSSI. The terminal device may compare the LP-RSRP measurement value with LP-RSRP_Threshold1, to obtain a decision result for LP-RSRP. The terminal device may compare the LP-SINR measurement value with LP-SINR_Threshold1, to obtain a decision result for LP-SINR. The terminal device may compare the LP-RSRQ measurement value with LP-RSRQ_Threshold1, to obtain a decision result for LP-RSRQ.

In summary, the terminal device may acquire the first decision threshold(s) associated with the type of its first receiver, and compare the actual measurement result(s) of the first receiver with the determined first decision threshold(s) to obtain the decision result(s), thereby compensating for measurement performance errors among different types of first receivers, enabling compatibility with different types of first receivers to a greatest extent, and maintaining system stability.

Approach 3

In some embodiments, as shown in FIG. 5, a communication processing method according to an embodiment of the disclosure may further include the following operation S 120C.

At S120C, the terminal device performs the one or more decisions related to the one or more signal measurements of the first receiver based on the one or more first decision thresholds and the one or more first offset parameters.

It should be understood that in the embodiment of the disclosure, the terminal device may determine the first decision threshold(s) and the first offset parameter(s) associated with the type of its first receiver. The terminal device performs decision(s) related to signal measurement(s) of the first receiver based on both the first decision threshold(s) and the first offset parameter(s) associated with the type of its first receiver. That is to say, for different types of first receivers, decision(s) related to signal measurement(s) of each first receiver may be performed based on the first decision threshold(s) and the first offset parameter(s) associated with the first receiver.

It should be noted that in approach 3 of the embodiments of the disclosure, for different categories of first receivers, each first receiver may adjust, based on the "first offset parameter(s)" associated with the category of the first receiver, the signal measurement result(s) of the first receiver, or the "first decision threshold(s)" associated with the category of the first receiver, or both the signal measurement result(s) of the first receiver and the "first decision threshold(s)" associated with the category of the first receiver. In this way, the terminal device may perform the decision(s) related to the signal measurement(s) of the first receiver based on the adjusted measurement result(s) and/or the adjusted first decision threshold(s).

In a possible implementation, the operation S120C that the terminal device performs the one or more decisions related to the one or more signal measurements of the first receiver based on the one or more first decision thresholds and the one or more first offset parameters may be achieved in the following manner.

The terminal device adjusts one or more measurement results of the first receiver based on the one or more first offset parameters, to obtain one or more adjusted measurement results; and

the terminal device performs one or more decisions on the one or more adjusted measurement results based on the one or more first decision thresholds.

It may be understood that in this implementation, the terminal device may adjust the measurement result(s) of the first receiver based on the first offset parameter(s) associated with the type to which the first receiver belongs, and compare the adjusted measurement result(s) with the first decision threshold(s) associated with the type of the first receiver to obtain the decision result(s).

The way in which the terminal device adjusts the measurement result(s) of the first receiver based on the first offset parameter(s) associated with the type of the first receiver may refer to the description in approach 1, which is not repeated herein for the sake of brevity.

In the embodiment of the disclosure, the terminal device may adjust the measurement result(s) of the first receiver based on the first offset parameter(s) associated with the type of its first receiver to obtain the adjusted measurement result(s), and perform decision(s) on the adjusted measurement result(s) based on the first decision threshold(s) associated with the type of the first receiver, thereby compensating for measurement performance errors among different types of first receivers, enabling compatibility with different types of first receivers to a greatest extent, and maintaining system stability.

In another possible implementation, the operation S120C that the terminal device performs the one or more decisions related to the one or more signal measurements of the first receiver based on the one or more first decision thresholds and the one or more first offset parameters may be achieved in the following manner.

The terminal device adjusts the one or more first decision thresholds based on the one or more first offset parameters, to obtain one or more adjusted first decision thresholds; and

the terminal device performs one or more decisions on one or more measurement results of the first receiver based on the one or more adjusted first decision thresholds.

It may be understood that in this implementation, the terminal device may adjust the first decision threshold(s) associated with the type of the first receiver based on the first offset parameter(s) associated with the type of the first receiver, and compare the adjusted first decision threshold(s) with the actual measurement result(s) of the first receiver to obtain the decision result(s).

For example, the adjusted first decision threshold(s) is taken as a final decision threshold(s). Here, the final decision threshold may be any of the following:

$$\text{Final decision threshold} = \text{First decision threshold} + \text{First offset parameter};$$

$$\text{Final decision threshold} = \text{First decision threshold} - \text{First offset parameter};$$

Final decision threshold = First decision threshold + First offset parameter * Scaling factor;

and Final decision threshold = First decision threshold - First offset parameter * Scaling factor.

It should be noted that value(s) of the first offset parameter(s) may be positive or negative, and no limits are made thereto in the embodiments of the disclosure.

The scaling factor may be predefined, or may be configured by the network device, and no limits are made thereto in the embodiments of the disclosure.

In the embodiment of the disclosure, the terminal device may compare the measurement result(s) actually measured with the aforementioned final decision threshold(s), to obtain the decision result(s).

In summary, the terminal device may adjust the first decision threshold(s) associated with the type of the first receiver based on the first offset parameter(s) associated with the type of the first receiver, and compare the adjusted first decision threshold(s) with the actual measurement result(s) of the first receiver to obtain the decision result(s), thereby compensating for measurement performance errors among different types of first receivers, enabling compatibility with different types of first receivers to a greatest extent, and maintaining system stability.

In yet another possible implementation, the operation S120C that the terminal device performs the one or more decisions related to the one or more signal measurements of the first receiver based on the one or more first decision thresholds and the one or more first offset parameters may be achieved in the following manner.

The terminal device adjusts the one or more first decision thresholds based on the one or more first offset parameters to obtain one or more adjusted first decision thresholds, and adjusts one or more measurement results of the first receiver based on the one or more first offset parameters to obtain one or more adjusted measurement results; and

the terminal device performs one or more decisions on the one or more adjusted measurement results based on the one or more adjusted first decision thresholds.

It may be understood that in this implementation, the terminal device may adjust the actual measurement result(s) of the first receiver and the first decision threshold(s) associated with the type of the first receiver based on the first offset parameter(s) associated with the type of the first receiver, and compare the adjusted measurement result(s) with the adjusted first decision threshold(s) to obtain the decision result(s).

It should be noted that the way in which the terminal device adjusts the measurement result(s) of the first receiver based on the first offset parameter(s) associated with the type to which the first receiver belongs, and the way in which the terminal device adjusts the first decision result(s) associated with the type to which the first receiver belongs based on the first offset parameter(s) associated with the type to which the first receiver belongs, may refer to the description in the above embodiments, which are not repeated herein for the sake of brevity.

In the embodiment of the disclosure, the terminal device may adjust the first decision threshold(s) associated with the type of the first receiver and the measurement result(s) based on the first offset parameter(s) associated with the type of the first receiver, and compare the adjusted first decision threshold(s) with the adjusted measurement result(s) to obtain the decision result(s), thereby compensating for measurement performance errors among different types of first receivers, enabling compatibility among different types of first receivers to a great extent, and maintaining system stability.

In some embodiments, the one or more first decision thresholds and/or the one or more first offset parameters may be configured for performing one or more of the following:

Assisting a second receiver in performing one or more decisions related to one or more radio resource management (RRM) measurements;

Activating/deactivating monitoring by the first receiver; and

Switching between the first receiver and the second receiver.

In a possible implementation, the first receiver utilizes the first decision threshold(s) and/or the first offset parameter(s) to assist the second receiver in performing decision(s) related to RRM measurement(s).

For example, intra-frequency measurement criteria in the related art include: if measurement results of the serving cell satisfy Srxlev > SIntraSearchP and Squal > SIntraSearchQ, the terminal device may choose not to perform intra-frequency measurement; otherwise, the terminal needs to perform intra-frequency measurement(s). In an example, Srxlex and/or Squal in the above criteria may be replaced with adjusted measurement result(s) obtained by the terminal device adjusting the actual measurement result(s) of the first receiver based on the first offset parameter(s), and SIntraSearchP and/or SIntraSearchQ may be replaced with the first decision threshold(s). In another example, Srxlex and Squal in the above criteria may be replaced with the actual measurement results of the first receiver, and SIntraSearchP and SIntraSearchQ in the above criteria may be replaced with decision thresholds adjusted based on the first offset parameters.

It should be noted that since RRM measurement result(s) has many applications (such as cell selection, cell reselection, cell handover, etc.), a manner similar to that described in the embodiments may be used to reuse rules, which will not be listed one by one here.

In another possible implementation, the terminal device may utilize the first decision threshold(s) and/or the first offset parameter(s) to activate/deactivate monitoring performed by the first receiver.

In an example, when the measurement result(s) (adjusted based on the first offset parameter(s)) is greater than/equal to the second decision threshold(s) (adjusted based on the first offset parameter(s)), the monitoring of WUS by the first receiver is activated; and when the measurement result(s) (adjusted based on the first offset parameter(s)) is less than/equal to the second decision threshold(s) (adjusted based on the first offset parameter(s)), the monitoring of WUS by the first receiver is deactivated. Alternatively, when the measurement result(s) (adjusted based on the first offset parameter(s)) is less than/equal to the second decision threshold(s) (adjusted based on the first offset parameter(s)), the monitoring of WUS by the first receiver is activated; and when the measurement result(s) (adjusted based on the first offset parameter(s)) is greater than/equal to the second decision threshold(s) (adjusted based on the first offset parameter(s)), the monitoring of WUS by the first receiver is deactivated.

In another example, when the measurement result(s) of the first receiver is greater than/equal to the first decision threshold(s) associated with the category to which the first receiver belongs, the monitoring of WUS by the first receiver is activated; and when the measurement result(s) of the first receiver is less than/equal to the first decision threshold(s) associated with the category to which the first receiver belongs, the monitoring of WUS by the first receiver is deactivated. Alternatively, when the measurement result(s) of the first receiver is less than/equal to the first decision threshold(s) associated with the category to which the first receiver belongs, the monitoring of WUS by the first receiver is activated; and when the measurement result(s) of the first receiver is greater than/equal to the first decision threshold(s) associated with the category to which the first receiver belongs, the monitoring of WUS by the first receiver is deactivated.

In yet another example, when the measurement result(s) (adjusted based on the first offset parameter(s)) is greater than/equal to the first decision threshold(s) (adjusted based on the first offset parameter(s)), the monitoring of WUS by the first receiver is activated; and when the measurement result(s) (adjusted based on the first offset parameter(s)) is less than/equal to the first decision threshold(s) (adjusted based on the first offset parameter(s)), the monitoring of WUS by the first receiver is deactivated. Alternatively, when the measurement result(s) (adjusted based on the first offset parameter(s)) is less than/equal to the first decision threshold(s) (adjusted based on the first offset parameter(s)), the monitoring of WUS by the first receiver is activated; and when the measurement result(s) (adjusted based on the first offset parameter(s)) is greater than/equal to the first decision threshold(s) (adjusted based on the first offset parameter(s)), the monitoring of WUS by the first receiver is deactivated.

In yet another possible implementation, the terminal device may utilize the first decision threshold(s) and/or the first offset parameter(s) to achieve switching between the first receiver and the second receiver.

In an example, when the measurement result(s) (adjusted based on the first offset parameter(s)) is greater than/equal to the second decision threshold(s) (adjusted based on the first offset parameter(s)), it indicates that the coverage performance of the first receiver is good, and the first receiver is applied to monitor the WUS. When the measurement result(s) (adjusted based on the first offset parameter(s)) is less than/equal to the second decision threshold(s) (adjusted based on the first offset parameter(s)), it may be determined that the coverage of the first receiver is poor, and in this case, it falls back to the legacy mechanism and the monitoring mechanism of the first receiver is not activated. Alternatively, when the measurement result(s) (adjusted based on the first offset parameter(s)) is less than/equal to the second decision threshold(s) (adjusted based on the first offset parameter(s)), the first receiver is applied to monitor the WUS. When the measurement result(s) (adjusted based on the first offset parameter(s)) is greater than/equal to the second decision threshold(s) (adjusted based on the first offset parameter(s)), it falls back to the legacy mechanism and the monitoring mechanism of the first receiver is not activated.

In another example, when the measurement result(s) of the first receiver is greater than/equal to the first decision threshold(s) associated with the category to which the first receiver belongs, it indicates that the coverage performance of the first receiver is good, and the first receiver is applied to monitor the WUS; and when the measurement result(s) of the first receiver is less than/equal to the first decision threshold(s) associated with the category to which the first receiver belongs, it may be determined that the coverage of the first receiver is poor, and in this case, it falls back to the legacy mechanism and the monitoring mechanism of the first receiver is not activated. Alternatively, when the measurement result(s) of the first receiver is less than/equal to the first decision threshold(s) associated with the category to which the first receiver belongs, the first receiver is applied to monitor the WUS; and when the measurement result(s) of the first receiver is greater than/equal to the first decision threshold(s) associated with the category to which the first receiver belongs, it falls back to the legacy mechanism and the monitoring mechanism of the first receiver is not activated.

In yet another example, when the measurement result(s) (adjusted based on the first offset parameter(s)) is greater than/equal to the first decision threshold(s) (adjusted based on the first offset parameter(s)), it indicates that the coverage performance of the first receiver is good, and the first receiver is applied to monitor the WUS; and when the measurement result(s) (adjusted based on the first offset parameter(s)) is less than/equal to the first decision threshold(s) (adjusted based on the first offset parameter(s)), it may be determined that the coverage of the first receiver is poor, and in this case, it falls back to the legacy mechanism and the monitoring mechanism of the first receiver is not activated. Alternatively, when the measurement result(s) (adjusted based on the first offset parameter(s)) is less than/equal to the first decision threshold(s) (adjusted based on the first offset parameter(s)), the first receiver is applied to monitor the WUS; and when the measurement result(s) (adjusted based on the first offset parameter(s)) is greater than/equal to the first decision threshold(s) (adjusted based on the first offset parameter(s)), it falls back to the legacy mechanism and the monitoring mechanism of the first receiver is not activated.

In summary, in the communication processing method according to the embodiments of the disclosure, terminal devices are supported to apply different types of first receivers. For different types of first receivers, their measurement errors or measurement accuracy are different. Therefore, when terminal devices applying different types of first receivers measure signal(s) from a same network device, the measurement results are different. In the embodiments of the disclosure, when terminal devices measure the signal(s) from the network device and process the measurement results based on corresponding thresholds combined with predefined criteria (such as RRM measurement, activation/deactivation of LP-WUS monitoring, switching between LP-WUR and MR for monitoring wake up signal, etc.), for different types of first receivers, each first receiver may use its associated offset value(s) to adjust the measurement result(s) and/or decision threshold(s), and perform decision(s) based on the adjusted measurement result(s) and/or decision threshold(s). In this way, the compatibility with different types of first receivers can be greatly enhanced, and the system stability can be maintained.

The communication processing method in the embodiments of the disclosure has been described in detail above from the perspective of the terminal with reference to FIG. 2. The following provides a detailed description of a communication processing method in the embodiments of the disclosure from the perspective of the network device with reference to FIG. 6. It should be understood that some operations performed by the network device may correspond to some operations performed by the terminal. For the sake of brevity, repeated descriptions are appropriately omitted in the following.

FIG. 6 illustrates a communication processing method according to an embodiment of the disclosure, and the method may include the following operation S210.

At S210, a network device transmits first information to a terminal device. The first information is configured for indicating one or more first decision thresholds and/or one or more first offset parameters associated with a type of a first receiver of the terminal device; and the one or more first decision thresholds and/or the one or more first offset parameters are configured for performing one or more decisions related to one or more signal measurements of the first receiver.

It may be understood that the network device may configure, for the terminal device, the first decision threshold(s) and/or the first offset parameter(s) associated with a category of the first receiver of the terminal device.

In some embodiments, a number of the one or more first decision thresholds is one or more, and a number of the one or more first offset parameters is one or more.

The first information includes one or more of the following:

Third configuration information, the third configuration information including the one or more first offset parameters;

Fourth configuration information, the fourth configuration information including a first mapping relationship, and the first mapping relationship representing one or more first offset parameters respectively associated with multiple types of first receivers;

Fifth configuration information, the fifth configuration information including the one or more first decision thresholds; and

Sixth configuration information, the sixth configuration information including one or more of a second mapping relationship, a third mapping relationship, and a third offset parameter; the second mapping relationship representing one or more first decision thresholds respectively associated with the multiple types of first receivers; the third mapping relationship representing one or more decision thresholds associated with a baseline type; and the third mapping relationship and the third configuration parameter are configured for determining the one or more first decision thresholds.

In a possible implementation, the network device may respectively configure, for different terminal devices, one or more first offset parameters and/or one or more first decision thresholds associated with the type of the first receiver of the terminal device. Here, the network device may acquire the type of the first receiver of the terminal device in advance, for example, the terminal device reports the type of its first receiver to the network device through capability information. In this way, the network device may separately configure, for the terminal device, the one or more first offset parameters and/or the one or more first decision thresholds associated with the type of the first receiver of the terminal device.

In another possible implementation, the network device may not need to acquire the type of the first receiver of each terminal device. The network device may configure, for the terminal device, one or more first offset parameters (i.e., the first mapping relationship) and/or one or more first decision thresholds (the second mapping relationship) respectively associated with multiple types of first receivers. In this way, the terminal device may select one or more appropriate first offset parameters and/or one or more appropriate first decision thresholds based on the type of its first receiver, thereby achieving decision(s) related to measurement(s).

It should be noted that the third configuration information, the fourth configuration information, the fifth configuration information, and the sixth configuration information may be transmitted separately or simultaneously, and no limits are made thereto in the embodiments of the disclosure.

In some embodiments, the first receiver supports to measure one or more measurement metrics.

A number of the one or more first offset parameters is one, and the one first offset parameter corresponds to the one or more measurement metrics;

or,

the number of the one or more first offset parameters is multiple, and the multiple first offset parameters correspond to the multiple measurement metrics.

In some embodiments, the first receiver supports to measure one or more measurement metrics.

A number of the one or more first decision thresholds is one, and the one first decision threshold is configured for performing one or more decisions on the one or more measurement metrics.

The number of the one or more first decision thresholds is multiple, the multiple first decision thresholds are associated with the multiple measurement metrics, and the multiple first decision thresholds are configured for performing decisions on the multiple measurement metrics associated with the multiple first decision thresholds.

In some embodiments, the communication processing method according to the embodiment of the disclosure may further include the following operation S220.

At S220, the network device transmits second information to the terminal device. The second information is configured for indicating one or more second decision thresholds; the terminal device is configured to perform the one or more decisions related to the one or more signal measurements of the first receiver based on the one or more second decision thresholds and the one or more first offset parameters; and different types of first receivers all perform decisions based on the one or more second decision thresholds.

In some embodiments, the first receiver supports to measure one or more measurement metrics.

A number of the one or more second decision thresholds is one, and the one second decision threshold is configured for performing one or more decisions on the one or more measurement metrics;

or,

the number of the one or more second decision thresholds is multiple, the multiple second decision thresholds are associated with the multiple measurement metrics; and the multiple second decision thresholds are configured for performing decisions on the multiple measurement metrics associated with the multiple second decision thresholds.

In some embodiments, in a case where the number of the one or more second decision thresholds is multiple, second decision thresholds associated with a same measurement metric are same for different types of first receivers.

In some embodiments, a number of the one or more second decision thresholds is one or more, and the second information includes first configuration information and/or second configuration information.

The first configuration information includes the one or more second decision thresholds.

The second configuration information includes a baseline decision threshold and/or one or more second offset parameters corresponding to the one or more measurement metrics respectively associated with the one or more second decision thresholds.

In some embodiments, the one or more first decision thresholds and/or the one or more first offset parameters are configured for performing one or more of the following:

Assisting a second receiver in performing one or more decisions related to one or more radio resource management (RRM) measurements;

Activating/deactivating monitoring by the first receiver; and

Switching between the first receiver and the second receiver.

The preferred embodiments of the disclosure are described in detail above with reference to the drawings. However, the disclosure is not limited to the specific details in the embodiments described above. Within the scope of the technical concept of the disclosure, various simple variations may be made to the technical solutions of the disclosure, and all these simple variations are within the scope of protection of the disclosure. For example, the specific technical features described in the above specific embodiments may be combined in any appropriate way without contradiction. In order to avoid unnecessary repetition, the disclosure does not further elaborate on various possible combinations. For another example, various different embodiments of the disclosure may also be combined arbitrarily, as long as they do not contradict the idea of the disclosure, they should also be regarded as the content disclosed by the disclosure. For yet another example, under the premise of no conflict, the various embodiments and/or technical features in the various embodiments described in the disclosure may be combined arbitrarily with the related art, and technical solutions obtained after such combinations should also fall within the scope of protection of the disclosure.

It should be further understood that in the various method embodiments of the disclosure, the order of sequence numbers for the above processes does not imply the order of execution. The order of execution of each of the processes should be determined based on its function and inherent logic, and should not constitute any limitation on the implementation process in the embodiments of the disclosure. Furthermore, in the embodiments of the disclosure, terms "downlink", "uplink", and "sidelink" are used to indicate the transmission direction of signals or data, herein "downlink" is used to indicate that the transmission direction of signals or data is a first direction transmitted from the station to the user device in the cell, "uplink" is used to indicate that the transmission direction of signals or data is a second direction transmitted from the user device in the cell to the station, and "sidelink" is used to indicate that the transmission direction of signals or data is a third direction transmitted from user device 1 to user device 2. For example, "downlink signal" indicates that the transmission direction of the signal is the first direction. Furthermore, in the embodiments of the disclosure, a term "and/or" is only an association relationship describing associated objects, and indicates that there may be three relationships. Specifically, A and/or B may indicate three cases: existence of A alone, existence of A and B simultaneously, and existence of B alone. Furthermore, a character "/" in the disclosure generally indicates that preceding and following associated objects are in an "or" relationship.

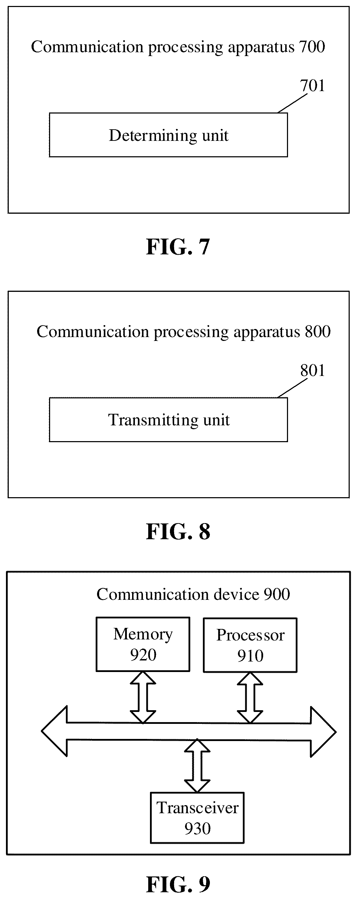

FIG. 7 is a schematic diagram of a structural composition of a communication processing apparatus 700 according to an embodiment of the disclosure, and the communication processing apparatus 700 is applied to a terminal device. As shown in FIG. 7, the communication processing apparatus 700 includes a determining unit 701.

The determining unit 701 is configured to determine one or more first decision thresholds and/or one or more first offset parameters associated with a type of a first receiver. The one or more first decision thresholds and/or the one or more first offset parameters are configured for performing one or more decisions related to one or more signal measurements of the first receiver.

In some embodiments, the communication processing apparatus 700 further includes a decision unit. The decision unit is configured to perform the one or more decisions related to the one or more signal measurements of the first receiver based on the one or more first offset parameters and one or more second decision thresholds. Here, different types of first receivers all perform decisions based on the one or more second decision thresholds.

In some embodiments, the decision unit is further configured to: adjust one or more measurement results of the first receiver based on the one or more first offset parameters, to obtain one or more adjusted measurement results; and perform one or more decisions on the one or more adjusted measurement results based on the one or more second decision thresholds.

In some embodiments, the decision unit is further configured to: adjust the one or more second decision thresholds based on the one or more first offset parameters, to obtain one or more adjusted second decision thresholds; and perform one or more decisions on one or more measurement results of the first receiver based on the one or more adjusted second decision thresholds.

In some embodiments, the decision unit is further configured to: adjust the one or more second decision thresholds based on the one or more first offset parameters, to obtain one or more adjusted second decision thresholds, and adjust one or more measurement results of the first receiver based on the one or more first offset parameters, to obtain one or more adjusted measurement results; and perform one or more decisions on the one or more adjusted measurement results based on the one or more adjusted second decision thresholds.

In some embodiments, the first receiver supports to measure one or more measurement metrics. A number of the one or more second decision thresholds is one, and the one second decision threshold is configured for performing one or more decisions on the one or more measurement metrics.

Alternatively, a number of the one or more second decision thresholds is multiple, the multiple second decision thresholds are associated with the multiple measurement metrics. The multiple second decision thresholds are configured for performing decisions on the multiple measurement metrics associated with the multiple second decision thresholds.

In some embodiments, in a case where the number of the one or more second decision thresholds is multiple, second decision thresholds associated with a same measurement metric are same for different types of first receivers.

In some embodiments, the one or more second decision thresholds are determined based on one or more of the following:

Predefinition;

A preset rule;

First configuration information transmitted by a network device; the first configuration information including the one or more second decision thresholds; and

A baseline decision threshold and/or one or more second offset parameters corresponding to the one or more measurement metrics respectively associated with the one or more second decision thresholds.

In some embodiments, the baseline decision threshold and/or the one or more second offset parameters corresponding to the one or more measurement metrics respectively associated with the one or more second decision thresholds are determined based on one or more of the following:

Predefinition;

A preset rule; and

Second configuration information transmitted by the network device; the second configuration information including the baseline decision threshold and/or the one or more second offset parameters corresponding to the one or more measurement metrics respectively associated with the one or more second decision thresholds.

In some embodiments, the decision unit is further configured to perform one or more decisions on one or more measurement results of the first receiver based on the one or more first decision thresholds.

In some embodiments, the decision unit is further configured to perform the one or more decisions related to the one or more signal measurements of the first receiver based on the one or more first decision thresholds and the one or more first offset parameters.

In some embodiments, the decision unit is further configured to: adjust one or more measurement results of the first receiver based on the one or more first offset parameters, to obtain one or more adjusted measurement results; and perform one or more decisions on the one or more adjusted measurement results based on the one or more first decision thresholds.

In some embodiments, the decision unit is further configured to: adjust the one or more first decision thresholds based on the one or more first offset parameters, to obtain one or more adjusted first decision thresholds; and perform one or more decisions on one or more measurement results of the first receiver based on the one or more adjusted first decision thresholds.

In some embodiments, the decision unit is further configured to: adjust the one or more first decision thresholds based on the one or more first offset parameters, to obtain one or more adjusted first decision thresholds, and adjust one or more measurement results of the first receiver based on the one or more first offset parameters, to obtain one or more adjusted measurement results; and perform one or more decisions on the one or more adjusted measurement results based on the one or more adjusted first decision thresholds.

In some embodiments, the first receiver supports to measure one or more measurement metrics.

A number of the one or more first offset parameters is one, and the one first offset parameter corresponds to the one or more measurement metrics.

Alternatively, the number of the one or more first offset parameters is multiple, and the multiple first offset parameters correspond to the multiple measurement metrics.

In some embodiments, a number of the one or more first offset parameters is one or more, and the one or more first offset parameters are determined based on one or more of the following:

Predefinition;

A preset rule;

Third configuration information transmitted by a network device; the third configuration information including the one or more first offset parameters; and

A first mapping relationship; the first mapping relationship representing one or more first offset parameters respectively associated with multiple types of first receivers.

In some embodiments, the first mapping relationship is determined based on one or more of the following:

Predefinition;

A preset rule; and

Fourth configuration information transmitted by the network device; the fourth configuration information including the first mapping relationship.

In some embodiments, the first receiver supports to measure one or more measurement metrics.

A number of the one or more first decision thresholds is one, and the one first decision threshold is configured for performing one or more decisions on the one or more measurement metrics.

The number of the one or more first decision thresholds is multiple, the multiple first decision thresholds are associated with the multiple measurement metrics, and the multiple first decision thresholds are configured for performing decisions on the multiple measurement metrics associated with the multiple first decision thresholds.

In some embodiments, a number of the one or more first decision thresholds is one or more, and the one or more first decision thresholds are determined based on one or more of the following:

Predefinition;

A preset rule;

Fifth configuration information transmitted by a network device; the fifth configuration information including the one or more first decision thresholds;

A second mapping relationship; the second mapping relationship representing one or more first decision thresholds respectively associated with multiple types of first receivers; and

A third mapping relationship and a third offset parameter; the third mapping relationship representing one or more decision thresholds associated with a baseline type.

In some embodiments, one or more of the second mapping relationship, the third mapping relationship, and the third offset parameter are determined based on one or more of the following:

Predefinition;

A preset rule; and

Sixth configuration information transmitted by the network device; the sixth configuration information including one or more of the second mapping relationship, the third mapping relationship, and the third offset parameter.

In some embodiments, the one or more first decision thresholds and/or the one or more first offset parameters are configured for performing one or more of the following:

Assisting a second receiver in performing one or more decisions related to one or more radio resource management (RRM) measurements;

Activating/deactivating monitoring by the first receiver; and

Switching between the first receiver and the second receiver.

In some embodiments, the terminal device includes the first receiver and a second receiver.
The first receiver includes one or more of an auxiliary receiver, a wake up radio (WUR), and a low power wake up radio (LP-WUR).
The second receiver is a main radio.
FIG. 8 is a schematic diagram of a structural composition of a communication processing apparatus 800 according to an embodiment of the disclosure, and the communication processing apparatus 800 is applied to a network device. As shown in FIG. 8, the communication processing apparatus 800 includes a transmitting unit 801.
The transmitting unit 801 is configured to transmit first information to a terminal device. The first information indicates one or more first decision thresholds and/or one or more first offset parameters associated with a type of a first receiver of the terminal device; and the one or more first decision thresholds and/or the one or more first offset parameters are configured for performing one or more decisions related to one or more signal measurements of the first receiver.
In some embodiments, a number of the one or more first decision thresholds is one or more, and a number of the one or more first offset parameters is one or more.
The first information includes one or more of the following:

Third configuration information, the third configuration information including the one or more first offset parameters;

Fourth configuration information, the fourth configuration information including a first mapping relationship, and the first mapping relationship representing one or more first offset parameters respectively associated with multiple types of first receivers;

Fifth configuration information, the fifth configuration information including the one or more first decision thresholds; and

Sixth configuration information, the sixth configuration information including one or more of a second mapping relationship, a third mapping relationship, and a third offset parameter; the second mapping relationship representing one or more first decision thresholds respectively associated with the multiple types of first receivers; the third mapping relationship representing one or more decision thresholds associated with a baseline type; and the third mapping relationship and the third configuration parameter are configured for determining the one or more first decision thresholds.

In some embodiments, the first receiver supports to measure one or more measurement metrics.
A number of the one or more first offset parameters is one, and the one first offset parameter corresponds to the one or more measurement metrics.
Alternatively, the number of the one or more first offset parameters is multiple, and the multiple first offset parameters correspond to the multiple measurement metrics.
In some embodiments, the first receiver supports to measure one or more measurement metrics.
A number of the one or more first decision thresholds is one, and the one first decision threshold is configured for performing one or more decisions on the one or more measurement metrics.
The number of the one or more first decision thresholds is multiple, the multiple first decision thresholds are associated with the multiple measurement metrics, and the multiple first decision thresholds are configured for performing decisions on the multiple measurement metrics associated with the multiple first decision thresholds.
In some embodiments, the transmitting unit 801 is further configured to transmit second information to the terminal device. The second information is configured for indicating one or more second decision thresholds; the terminal device is configured to perform the one or more decisions related to the one or more signal measurements of the first receiver based on the one or more second decision thresholds and the one or more first offset parameters; and different types of first receivers all perform decisions based on the one or more second decision thresholds.

In some embodiments, the first receiver supports to measure one or more measurement metrics.

A number of the one or more second decision thresholds is one, and the one second decision threshold is configured for performing one or more decisions on the one or more measurement metrics; or the number of the one or more second decision thresholds is multiple, the multiple second decision thresholds are associated with the multiple measurement metrics; and the multiple second decision thresholds are configured for performing decisions on the multiple measurement metrics associated with the multiple second decision thresholds.

In some embodiments, in a case where the number of the one or more second decision thresholds is multiple, second decision thresholds associated with a same measurement metric are same for different types of first receivers.

In some embodiments, a number of the one or more second decision thresholds is one or more, and the second information includes first configuration information and/or second configuration information.

The first configuration information includes the one or more second decision thresholds.

The second configuration information includes a baseline decision threshold and/or one or more second offset parameters corresponding to the one or more measurement metrics respectively associated with the one or more second decision thresholds.

In some embodiments, the one or more first decision thresholds and/or the one or more first offset parameters are configured for performing one or more of the following:

Assisting a second receiver in performing one or more decisions related to one or more radio resource management (RRM) measurements;

Activating/deactivating monitoring by the first receiver; and

Switching between the first receiver and the second receiver.

In some embodiments, the terminal device includes the first receiver and a second receiver.

The first receiver includes one or more of an auxiliary receiver, a wake up radio (WUR), and a low power wake up radio (LP-WUR).

The second receiver is a main radio.

It should be understood by those skilled in the art that the related description of the above communication processing apparatus in the embodiments of the disclosure may be understood with reference to the related description of the communication processing method in the embodiments of the disclosure.

FIG. 9 is a schematic structural diagram of a communication device 900 according to an embodiment of the disclosure. The communication device may be a terminal device or a network device. The communication device 900 shown in FIG. 9 includes a processor 910, which may call and run a computer program from a memory to implement the method in the embodiments of the disclosure.

Optionally, as shown in FIG. 9, the communication device 900 may further include a memory 920. The processor 910 may call and run a computer program from the memory 920 to implement the method in the embodiments of the disclosure.

Here, the memory 920 may be a separate device independent of the processor 910, or may be integrated in the processor 910.

Optionally, as shown in FIG. 9, the communication device 900 may further include a transceiver 930, and the processor 910 may control the transceiver 930 to communicate with other devices. Specifically, the transceiver 930 may transmit information or data to other devices, or may receive information or data from other devices.

Here, the transceiver 930 may include a transmitter and a receiver. The transceiver 930 may further include one or more antennas.

Optionally, the communication device 900 may specifically be the network device in the embodiments of the disclosure, and the communication device 900 may implement the corresponding processes implemented by the network device in various methods in the embodiments of the disclosure, which are not repeated herein for the sake of brevity.

Optionally, the communication device 900 may specifically be the mobile terminal/terminal device in the embodiments of the disclosure, and the communication device 900 may implement the corresponding processes implemented by the mobile terminal/terminal device in various methods in the embodiments of the disclosure, which are not repeated herein for the sake of brevity.

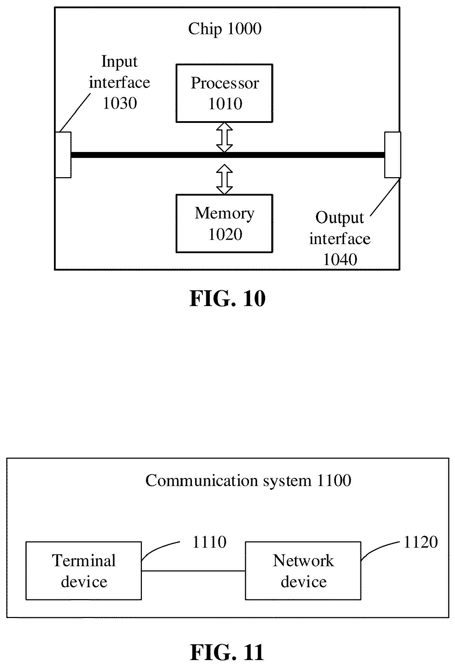

FIG. 10 is a schematic structural diagram of a chip according to an embodiment of the disclosure. The chip 1000 shown in FIG. 10 includes a processor 1010, which may call and run a computer program from a memory to implement the method in the embodiments of the disclosure.

Optionally, as shown in FIG. 10, the chip 1000 may further include a memory 1020. The processor 1010 may call and run a computer program from the memory 1020 to implement the method in the embodiments of the disclosure.

The memory 1020 may be a separate device independent of the processor 1010, or may be integrated in the processor 1010.

Optionally, the chip 1000 may further include an input interface 1030. The processor 1010 may control the input interface 1030 to communicate with other devices or chips. Specifically, the input interface 1030 may acquire information or data from other devices or chips.

Optionally, the chip 1000 may further include an output interface 1040. The processor 1010 may control the output interface 1040 to communicate with other devices or chips. Specifically, the output interface 1040 may output information or data to other devices or chips.

Optionally, the chip may be applied to the network device in the embodiments of the disclosure, and the chip may implement the corresponding processes implemented by the network device in various methods in the embodiments of the disclosure, which are not repeated herein for the sake of brevity.

Optionally, the chip may be applied to the mobile terminal/terminal device in the embodiments of the disclosure, and the chip may implement the corresponding processes implemented by the mobile terminal/terminal device in various methods in the embodiments of the disclosure, which are not repeated herein for the sake of brevity.

It should be understood that the chip mentioned in the embodiments of the disclosure may also be referred to as a system on chip, a system chip, a chip system, or a system on chip, etc.

FIG. 11 is a schematic block diagram of a communication system 1100 according to an embodiment of the disclosure. As shown in FIG. 11, the communication system 1100 includes a terminal device 1110 and a network device 1120.

The terminal device 1110 may be configured to implement the corresponding functions implemented by the terminal device in the above method, and the network device 1120 may be configured to implement the corresponding functions implemented by the network device in the above method, which are not repeated herein for the sake of brevity.

It should be understood that the processor in the embodiments of the disclosure may be an integrated circuit chip having signal processing capability. In the implementation process, each operation of the above method embodiments may be accomplished by an integrated logic circuit of hardware or by instructions in form of software in the processor. The above processor may be a general purpose processor, a Digital Signal Processor (DSP), an Application Specific Integrated Circuit (ASIC), a Field Programmable Gate Array (FPGA), or other programmable logic device, discrete gate or transistor logic device, discrete hardware component. The processor may implement or perform the methods, operations, and logical block diagrams disclosed in the embodiments of the disclosure. The general purpose processor may be a microprocessor or any conventional processor or the like. The operations of the methods disclosed in the embodiments of the disclosure may be directly accomplished by the hardware decoding processor, or be accomplished by a combination of hardware and software modules in the decoding processor. The software module may be located in a Random Access Memory (RAM), a flash memory, a Read-Only Memory (ROM), a Programmable ROM (PROM) or an electrically erasable programmable memory, a register and other storage medium mature in the art. The storage medium is located in the memory, and the processor reads information in the memory to implement the operations of the methods above in combination with the hardware.

It may be understood that the memory in the embodiments of the disclosure may be a transitory memory or a non-transitory memory, or may include both the transitory memory and the non-transitory memory. The non-transitory memory may be a ROM, a PROM, an Erasable PROM (EPROM), an Electrically EPROM (EEPROM), or a flash memory. The transitory memory may be a RAM that used as an external cache. By way of illustration but not limitation, many forms of RAMs may be available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories of the systems and methods described herein are intended to include, but are not limited to, these and any other suitable types of memories.

It should be understood that the above memories are examples but not limiting descriptions. For example, the memory in the embodiments of the disclosure may also be an SRAM, a DRAM, an SDRAM, a DDR SDRAM, an ESDRAM, an SLDRAM, a DR RAM, and the like. That is, the memory in the embodiments of the disclosure is intended to include, but is not limited to, these and any other suitable types of memories.

According to an embodiment of the disclosure, a computer-readable storage medium is further provided, and the computer-readable storage medium is configured to store a computer program.

Optionally, the computer-readable storage medium may be applied to the network device in the embodiments of the disclosure, and the computer program enables the computer to execute the corresponding processes implemented by the network device in the various methods in the embodiments of the disclosure, which are not repeated herein for the sake of brevity.

Optionally, the computer-readable storage medium may be applied to the mobile terminal/terminal device in the embodiments of the disclosure, and the computer program enables the computer to execute the corresponding processes implemented by the mobile terminal/terminal device in the various methods in the embodiments of the disclosure, which are not repeated herein for the sake of brevity.

According to an embodiment of the disclosure, a computer program product is further provided, and the computer program product includes computer program instructions.

Optionally, the computer program product may be applied to the network device in the embodiments of the disclosure, and the computer program instructions cause the computer to execute the corresponding processes implemented by the network device in the various methods in the embodiments of the disclosure, which are not repeated herein for the sake of brevity.

Optionally, the computer program product may be applied to the mobile terminal/terminal device in the embodiments of the disclosure, and the computer program instructions cause the computer to execute the corresponding processes implemented by the mobile terminal/terminal device in the various methods in the embodiments of the disclosure, which are not repeated herein for the sake of brevity.

According to an embodiment of the disclosure, a computer program is further provided.

Optionally, the computer program may be applied to the network device in the embodiments of the disclosure, and the computer program, when run on a computer, causes the computer to execute the corresponding processes implemented by the network device in the various methods in the embodiments of the disclosure, which are not repeated herein for the sake of brevity.

Optionally, the computer program may be applied to the mobile terminal/terminal device in the embodiments of the disclosure, and the computer program, when run on a computer, causes the computer to execute the corresponding processes implemented by the mobile terminal/terminal device in the various methods in the embodiments of the disclosure, which are not repeated herein for the sake of brevity.

It may be appreciated by those of ordinary skill in the art that the various example units and algorithm operations described in conjunction with the embodiments disclosed herein may be implemented in electronic hardware or a combination of computer software and electronic hardware. Whether these functions are performed in hardware or software depends on specific applications and design constraints of the technical solution. Those skilled may use different methods for specific applications to implement the described functions, but such implementation should not be considered beyond the scope of the disclosure.

It may be clearly appreciated by those skilled in the art that, for convenience and conciseness of description, regarding the specific operating processes of the systems, apparatuses and units described above, reference may be made to the corresponding processes in the aforementioned method embodiments, which are not repeated herein.

In the several embodiments provided in the disclosure, it should be understood that the disclosed systems, apparatuses and methods may be implemented by other ways. For example, the apparatus embodiments described above are only illustrative. For example, the division of the units is only a logical functional division, and in practice, there may be other divisions. For example, multiple units or components may be combined or integrated into another system, or some features may be ignored or not performed. On the other hand, the coupling or direct coupling or communication connection between the units and components illustrated or discussed may be indirect coupling or communication connection through some interfaces, apparatuses or units, and may be electrical, mechanical or other forms.

The units illustrated as separate components may or may not be physically separated, and the components displayed as units may or may not be physical units, i.e., the units and components may be located in one place, or may be distributed over multiple network units. A part or all of the units may be selected according to actual needs to achieve the purposes of the solutions in the embodiments.

Furthermore, the functional units in the various embodiments of the disclosure may be integrated in one processing unit, or the units may exist physically individually, or two or more units may be integrated in one unit.

The functions may be stored in a computer-readable storage medium if the functions are implemented in form of software functional units and sold or used as stand-alone products. Based on such understanding, the essence of the technical solutions of the disclosure, or the part that contributes to the related art, or part of the technical solutions may be embodied in the form of a software product, and this computer software product is stored in a storage medium, and includes several instructions used to enable a computer device (which may be a personal computer, a server, or a network device, etc.) to implement all or part of the operations of the methods described in the various embodiments of the disclosure. The aforementioned storage medium includes a Universal Serial Bus (USB) flash drive, a removable hard disk, a Read-Only Memory (ROM), a Random Access Memory (RAM), a magnetic disk, an optical disk, or any other medium that may store program codes.

The descriptions above are merely specific embodiments of the disclosure, but the scope of protection of the disclosure is not limited thereto. Any change or replacement readily contemplated by a person skilled in the art within the technical scope disclosed in the disclosure shall fall within the scope of protection of the disclosure. Accordingly, the scope of protection of the disclosure shall be subject to the scope of protection of the claims.

**Claims**

1. A communication processing method, comprising:
   determining, by a terminal device, one or more first decision thresholds and/or one or more first offset parameters associated with a type of a first receiver; wherein the one or more first decision thresholds and/or the one or more first offset parameters are configured for performing one or more decisions related to one or more signal measurements of the first receiver.

2. The method of claim 1, further comprising:
   performing, by the terminal device, the one or more decisions related to the one or more signal measurements of the first receiver based on the one or more first offset parameters and one or more second decision thresholds; wherein different types of first receivers all perform decisions based on the one or more second decision thresholds.

3. The method of claim 2, wherein performing, by the terminal device, the one or more decisions related to the one or more signal measurements of the first receiver based on the one or more first offset parameters and the one or more second decision thresholds comprises:

   adjusting, by the terminal device, one or more measurement results of the first receiver based on the one or more first offset parameters, to obtain one or more adjusted measurement results; and
   performing, by the terminal device, one or more decisions on the one or more adjusted measurement results based on the one or more second decision thresholds.

4. The method of claim 2, wherein performing, by the terminal device, the one or more decisions related to the one or more signal measurements of the first receiver based on the one or more first offset parameters and the one or more second decision thresholds comprises:

   adjusting, by the terminal device, the one or more second decision thresholds based on the one or more first offset parameters, to obtain one or more adjusted second decision thresholds; and
   performing, by the terminal device, one or more decisions on one or more measurement results of the first receiver based on the one or more adjusted second decision thresholds.

5. The method of claim 2, wherein performing, by the terminal device, the one or more decisions related to the one or more signal measurements of the first receiver based on the one or more first offset parameters and the one or more second decision thresholds comprises:

   adjusting, by the terminal device, the one or more second decision thresholds based on the one or more first offset parameters, to obtain one or more adjusted second decision thresholds, and adjusting one or more measurement results of the first receiver based on the one or more first offset parameters, to obtain one or more adjusted measurement results; and
   performing, by the terminal device, one or more decisions on the one or more adjusted measurement results based on the one or more adjusted second decision thresholds.

6. The method of any one of claims 2 to 5, wherein the first receiver supports to measure one or more measurement metrics;

   a number of the one or more second decision thresholds is one, and the one second decision threshold is configured for performing one or more decisions on the one or more measurement metrics; or
   a number of the one or more second decision thresholds is multiple, the multiple second decision thresholds are associated with the multiple measurement metrics; and the multiple second decision thresholds are configured for performing decisions on the multiple measurement metrics associated with the multiple second decision thresholds.

7. The method of claim 6, wherein in a case where the number of the one or more second decision thresholds is multiple, second decision thresholds associated with a same measurement metric are same for different types of first receivers.

8. The method of claim 6, wherein the one or more second decision thresholds are determined based on one or more of the following:

predefinition;

a preset rule;

first configuration information transmitted by a network device; the first configuration information comprising the one or more second decision thresholds; and

a baseline decision threshold and/or one or more second offset parameters corresponding to the one or more measurement metrics respectively associated with the one or more second decision thresholds.

9. The method of claim 8, wherein the baseline decision threshold and/or the one or more second offset parameters corresponding to the one or more measurement metrics respectively associated with the one or more second decision thresholds are determined based on one or more of the following:

predefinition;

a preset rule; and

second configuration information transmitted by the network device; the second configuration information comprising the baseline decision threshold and/or the one or more second offset parameters corresponding to the one or more measurement metrics respectively associated with the one or more second decision thresholds.

10. The method of claim 1, further comprising:

performing, by the terminal device, one or more decisions on one or more measurement results of the first receiver based on the one or more first decision thresholds.

11. The method of claim 1, further comprising:

performing, by the terminal device, the one or more decisions related to the one or more signal measurements of the first receiver based on the one or more first decision thresholds and the one or more first offset parameters.

12. The method of claim 11, wherein performing, by the terminal device, the one or more decisions related to the one or more signal measurements of the first receiver based on the one or more first decision thresholds and the one or more first offset parameters comprises:

adjusting, by the terminal device, one or more measurement results of the first receiver based on the one or more first offset parameters, to obtain one or more adjusted measurement results; and

performing, by the terminal device, one or more decisions on the one or more adjusted measurement results based on the one or more first decision thresholds.

13. The method of claim 11, wherein performing, by the terminal device, the one or more decisions related to the one or more signal measurements of the first receiver based on the one or more first decision thresholds and the one or more first offset parameters comprises:

adjusting, by the terminal device, the one or more first decision thresholds based on the one or more first offset parameters, to obtain one or more adjusted first decision thresholds; and

performing, by the terminal device, one or more decisions on one or more measurement results of the first receiver based on the one or more adjusted first decision thresholds.

14. The method of claim 11, wherein performing, by the terminal device, the one or more decisions related to the one or more signal measurements of the first receiver based on the one or more first decision thresholds and the one or more first offset parameters comprises:

adjusting, by the terminal device, the one or more first decision thresholds based on the one or more first offset parameters, to obtain one or more adjusted first decision thresholds, and adjusting one or more measurement results of the first receiver based on the one or more first offset parameters, to obtain one or more adjusted measurement results; and

performing, by the terminal device, one or more decisions on the one or more adjusted measurement results based on the one or more adjusted first decision thresholds.

15. The method of any one of claims 1 to 14, wherein the first receiver supports to measure one or more measurement metrics;

a number of the one or more first offset parameters is one, and the one first offset parameter corresponds to the one or more measurement metrics; or

the number of the one or more first offset parameters is multiple, and the multiple first offset parameters correspond to the multiple measurement metrics.

16. The method of any one of claims 1 to 15, wherein a number of the one or more first offset parameters is one or more, and the one or more first offset parameters are determined based on one or more of the following:

predefinition;

a preset rule;

third configuration information transmitted by a network device; the third configuration information comprising the one or more first offset parameters; and

a first mapping relationship; the first mapping relationship representing one or more first offset parameters respectively associated with multiple types of first receivers.

17. The method of claim 16, wherein the first mapping relationship is determined based on one or more of the following:

predefinition;

a preset rule; and

fourth configuration information transmitted by the network device; the fourth configuration information comprising the first mapping relationship.

18. The method of any one of claims 1 to 17, wherein the first receiver supports to measure one or more measurement metrics;

a number of the one or more first decision thresholds is one, and the one first decision threshold is configured for performing one or more decisions on the one or more measurement metrics; or

a number of the one or more first decision thresholds is multiple, the multiple first decision thresholds are associated with the multiple measurement metrics, and each of the multiple first decision thresholds is configured for performing a decision on a measurement metric associated with a respective one of the multiple first decision thresholds.

19. The method of any one of claims 1 to 18, wherein a number of the one or more first decision thresholds is one or more, and the one or more first decision thresholds are determined based on one or more of the following:

predefinition;

a preset rule;

fifth configuration information transmitted by a network device; the fifth configuration information comprising the one or more first decision thresholds;

a second mapping relationship; the second mapping relationship representing one or more first decision thresholds respectively associated with multiple types of first receivers; and

a third mapping relationship and a third offset parameter; the third mapping relationship representing one or more decision thresholds associated with a baseline type.

20. The method of claim 19, wherein one or more of the second mapping relationship, the third mapping relationship, and the third offset parameter are determined based on one or more of the following:

predefinition;

a preset rule; and

sixth configuration information transmitted by the network device; the sixth configuration information comprising one or more of the second mapping relationship, the third mapping relationship, and the third offset parameter.

21. The method of any one of claims 1 to 20, wherein the one or more first decision thresholds and/or the one or more first offset parameters are configured for performing one or more of the following:

assisting a second receiver in performing one or more decisions related to one or more radio resource management (RRM) measurements;

activating/deactivating monitoring by the first receiver; and

switching between the first receiver and the second receiver.

22. The method of any one of claims 1 to 21, wherein the terminal device comprises the first receiver and a second receiver;

the first receiver comprises one or more of an auxiliary receiver, a wake up radio (WUR), and a low power wake up radio (LP-WUR); and
the second receiver is a main radio.

23. A communication processing method, comprising:
transmitting, by a network device, first information to a terminal device, wherein the first information indicates one or more first decision thresholds and/or one or more first offset parameters associated with a type of a first receiver of the terminal device; and the one or more first decision thresholds and/or the one or more first offset parameters are configured for performing one or more decisions related to one or more signal measurements of the first receiver.

24. The method of claim 23, wherein a number of the one or more first decision thresholds is one or more, and a number of the one or more first offset parameters is one or more;
the first information comprises one or more of the following:

third configuration information, the third configuration information comprising the one or more first offset parameters;
fourth configuration information, the fourth configuration information comprising a first mapping relationship, and the first mapping relationship representing one or more first offset parameters respectively associated with multiple types of first receivers;
fifth configuration information, the fifth configuration information comprising the one or more first decision thresholds; and
sixth configuration information, the sixth configuration information comprising one or more of a second mapping relationship, a third mapping relationship, and a third offset parameter; the second mapping relationship representing one or more first decision thresholds respectively associated with the multiple types of first receivers; the third mapping relationship representing one or more decision thresholds associated with a baseline type; and the third mapping relationship and the third configuration parameter are configured for determining the one or more first decision thresholds.

25. The method of claim 23 or 24, wherein the first receiver supports to measure one or more measurement metrics;

a number of the one or more first offset parameters is one, and the one first offset parameter corresponds to the one or more measurement metrics; or
the number of the one or more first offset parameters is multiple, and the multiple first offset parameters correspond to the multiple measurement metrics.

26. The method of any one of claims 23 to 25, wherein the first receiver supports to measure one or more measurement metrics;

a number of the one or more first decision thresholds is one, and the one first decision threshold is configured for performing one or more decisions on the one or more measurement metrics; or
a number of the one or more first decision thresholds is multiple, the multiple first decision thresholds are associated with the multiple measurement metrics, and each of the multiple first decision thresholds is configured for performing a decision on one or more measurement metrics associated with a respective one of the multiple first decision thresholds.

27. The method of claim 23, further comprising:
transmitting, by the network device, second information to the terminal device, wherein the second information is configured for indicating one or more second decision thresholds; the terminal device is configured to perform the one or more decisions related to the one or more signal measurements of the first receiver based on the one or more second decision thresholds and the one or more first offset parameters; and different types of first receivers all perform decisions based on the one or more second decision thresholds.

28. The method of claim 27, wherein the first receiver supports to measure one or more measurement metrics;

a number of the one or more second decision thresholds is one, and the one second decision threshold is configured for performing one or more decisions on the one or more measurement metrics; or
a number of the one or more second decision thresholds is multiple, the multiple second decision thresholds are associated with the multiple measurement metrics; and each of the multiple second decision thresholds are configured for performing one or more decisions on one or more measurement metrics associated with a respective one of the multiple second decision thresholds.

29. The method of claim 28, wherein in a case where the number of the one or more second decision thresholds is multiple, second decision thresholds associated with a same measurement metric are same for different types of first receivers.

30. The method of any one of claims 27 to 29, wherein a number of the one or more second decision thresholds is one or more, and the second information comprises first configuration information and/or second configuration information;

    the first configuration information comprises the one or more second decision thresholds; and
    the second configuration information comprises a baseline decision threshold and/or one or more second offset parameters corresponding to the one or more measurement metrics respectively associated with the one or more second decision thresholds.

31. The method of any one of claims 23 to 30, wherein the one or more first decision thresholds and/or the one or more first offset parameters are configured for performing one or more of the following:

    assisting a second receiver in performing one or more decisions related to one or more radio resource management (RRM) measurements;
    activating/deactivating monitoring by the first receiver; and
    switching between the first receiver and the second receiver.

32. The method of any one of claims 23 to 31, wherein the terminal device comprises the first receiver and a second receiver;

    the first receiver comprises one or more of an auxiliary receiver, a wake up radio (WUR), and a low power wake up radio (LP-WUR); and
    the second receiver is a main radio.

33. A communication apparatus, applied to a terminal device, comprising:
    a determining unit, configured to determine one or more first decision thresholds and/or one or more first offset parameters associated with a type of a first receiver; wherein the one or more first decision thresholds and/or the one or more first offset parameters are configured for performing one or more decisions related to one or more signal measurements of the first receiver.

34. A communication apparatus, applied to a network device, comprising:
    a transmitting unit, configured to transmit first information to a terminal device, wherein the first information indicates one or more first decision thresholds and/or one or more first offset parameters associated with a type of a first receiver of the terminal device; and the one or more first decision thresholds and/or the one or more first offset parameters are configured for performing one or more decisions related to one or more signal measurements of the first receiver.

35. A terminal, comprising:

    a memory, configured to store computer executable instructions; and
    a processor, connected to the memory and configured to implement the method of any one of claims 1 to 22 by executing the computer executable instructions.

36. A network node, comprising:

    a memory, configured to store computer executable instructions; and
    a processor, connected to the memory and configured to implement the method of any one of claims 23 to 32 by executing the computer executable instructions.

37. A chip, comprising:

a processor, configured to call and run a computer program from a memory, causing a device installed with the chip to implement the method of any one of claims 1 to 22, or implement the method of any one of claims 23 to 32.

38. A computer-readable storage medium, storing a computer program that, when executed by at least one processor, implements the method of any one of claims 1 to 22, or implements the method of any one of claims 23 to 32.

39. A computer program product, comprising a computer storage medium that stores a computer program, the computer program comprising instructions executable by at least one processor, and the instructions, when executed by the at least one processor, implement the method of any one of claims 1 to 22, or implements the method of any one of claims 23 to 32.

40. A computer program, causing a computer to implement the method of any one of claims 1 to 22, or to implement the method of any one of claims 23 to 32.

<u>100</u>

130

110          120          110

FIG. 1

| A terminal device determines one or more first decision thresholds and/or one or more first offset parameters associated with a type of a first receiver; herein the one or more first decision thresholds and/or the one or more first offset parameters are configured for performing one or more decisions related to one or more signal measurements of the first receiver | S110 |

FIG. 2

| A terminal device determines one or more first decision thresholds and/or one or more first offset parameters associated with a type of a first receiver; herein the one or more first decision thresholds and/or the one or more first offset parameters are configured for performing one or more decisions related to one or more signal measurements of the first receiver | S110 |

| The terminal device performs the one or more decisions related to the one or more signal measurements of the first receiver based on the one or more first offset parameters and one or more second decision thresholds; herein different types of first receivers all perform decisions based on the one or more second decision thresholds | S120A |

FIG. 3

A terminal device determines one or more first decision thresholds and/or one or more first offset parameters associated with a type of a first receiver; herein the one or more first decision thresholds and/or the one or more first offset parameters are configured for performing one or more decisions related to one or more signal measurements of the first receiver — S110

The terminal device performs one or more decisions on one or more measurement results of the first receiver based on the one or more first decision thresholds — S120B

## FIG. 4

A terminal device determines one or more first decision thresholds and/or one or more first offset parameters associated with a type of a first receiver; herein the one or more first decision thresholds and/or the one or more first offset parameters are configured for performing one or more decisions related to one or more signal measurements of the first receiver — S110

The terminal device performs the one or more decisions related to the one or more signal measurements of the first receiver based on the one or more first decision thresholds and the one or more first offset parameters — S120C

## FIG. 5

A network device transmits first information to a terminal device, the first information is configured for indicating one or more first decision thresholds and/or one or more first offset parameters associated with a type of a first receiver of the terminal device; and the one or more first decision thresholds and/or the one or more first offset parameters are configured for performing one or more decisions related to one or more signal measurements of the first receiver — S210

## FIG. 6

Communication processing apparatus 700

701

Determining unit

**FIG. 7**

Communication processing apparatus 800

801

Transmitting unit

**FIG. 8**

Communication device 900

Memory
920

Processor
910

Transceiver
930

**FIG. 9**

Chip 1000

Input
interface
1030

Processor
1010

Memory
1020

Output
interface
1040

**FIG. 10**

Communication system 1100

Terminal
device

1110

Network
device

1120

**FIG. 11**

## INTERNATIONAL SEARCH REPORT

| International application No. |
| --- |
| **PCT/CN2023/106764** |

**A.    CLASSIFICATION OF SUBJECT MATTER**

H04W 24/02(2009.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNABS, CNTXT, ENTXT, ENTXTC, EPTXT, USTXT, WOTXT, CNKI: 调整, 调整后, 阀值, 接收机, 类型, 门限, 判, 判决, 偏移, 偏置, 预设值, 种类, 阈值, bias, hyst, measurement, metric, offset, receiver, threshold, type, WUR, WUS, LP-WUR

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2023068995 A1 (TELEFONAKTIEBOLAGET LM ERICSSON (PUBL)) 27 April 2023 (2023-04-27) description, page 11, paragraph 11-page 30, paragraph 29 | 1-40 |
| A | CN 110800341 A (TELEFONAKTIEBOLAGET LM ERICSSON (PUBL)) 14 February 2020 (2020-02-14) entire document | 1-40 |
| A | CN 114697992 A (VIVO COMMUNICATION TECHNOLOGY CO., LTD.) 01 July 2022 (2022-07-01) entire document | 1-40 |
| A | WO 2023035657 A1 (QUALCOMM INC. et al.) 16 March 2023 (2023-03-16) entire document | 1-40 |
| A | WO 2023096565 A1 (TELEFONAKTIEBOLAGET LM ERICSSON (PUBL)) 01 June 2023 (2023-06-01) entire document | 1-40 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 December 2023** | **21 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## **INTERNATIONAL SEARCH REPORT**

| | International application No. |
|---|---|
| | **PCT/CN2023/106764** |

| C. | DOCUMENTS CONSIDERED TO BE RELEVANT | |
|---|---|---|
| Category* | Citation of document, with indication, where appropriate, of the relevant passages | Relevant to claim No. |
| A | WO 2023102823 A1 (GUANGDONG OPPO MOBILE TELECOMMUNICATIONS CORP., LTD.) 15 June 2023 (2023-06-15)<br>entire document | 1-40 |

Form PCT/ISA/210 (second sheet) (July 2022)

**INTERNATIONAL SEARCH REPORT**
Information on patent family members

International application No.

**PCT/CN2023/106764**

| Patent document cited in search report | | | Publication date (day/month/year) | Patent family member(s) | | | Publication date (day/month/year) |
|---|---|---|---|---|---|---|---|
| WO | 2023068995 | A1 | 27 April 2023 | None | | | |
| CN | 110800341 | A | 14 February 2020 | WO | 2019001845 | A1 | 03 January 2019 |
| | | | | US | 2023089473 | A1 | 23 March 2023 |
| | | | | JP | 2020526083 | A | 27 August 2020 |
| | | | | US | 2020163018 | A1 | 21 May 2020 |
| | | | | EP | 3646642 | A1 | 06 May 2020 |
| CN | 114697992 | A | 01 July 2022 | JP | 2023549909 | A | 29 November 2023 |
| | | | | EP | 4221300 | A1 | 02 August 2023 |
| | | | | WO | 2022143537 | A1 | 07 July 2022 |
| | | | | US | 20230292152 | A1 | 14 September 2023 |
| WO | 2023035657 | A1 | 16 March 2023 | None | | | |
| WO | 2023096565 | A1 | 01 June 2023 | None | | | |
| WO | 2023102823 | A1 | 15 June 2023 | None | | | |

Form PCT/ISA/210 (patent family annex) (July 2022)